# EUROPEAN PATENT APPLICATION

(11) **EP 4 224 963 A1**
(43) Date of publication of application: **09.08.2023**
(21) Application number: 21888585.3
(22) Date of filing: 03.11.2021
(51) Int. Cl.: H04W 72/04

(54) **RESOURCE PROCESSING METHOD AND APPARATUS, AND STORAGE MEDIUM**

(30) Priority: 03.11.2020 CN 202011210192; 03.02.2021 CN 202110153049
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Maiwald GmbH
(86) International application number: PCT/CN2021/128384
(87) International publication number: WO 2022/095888

(57) **Abstract**

This application relates to the field of communication technologies, and in particular, to a resource processing method and apparatus and a storage medium. The method includes: A first device receives first SCI. The first SCI includes first indication information. The first indication information indicates a first time-frequency resource, and the first indication information further indicates the first device to send second SCI. The first device sends the second SCI. The second SCI includes second indication information. The second indication information indicates a second time-frequency resource. The first time-frequency resource is a time-frequency resource reserved for a second device for sending data to the first device or a time-frequency resource that is reserved for the second device for sending data to the first device and that is reserved for the first device for receiving data. The second time-frequency resource is a time-frequency resource reserved for the first device for receiving data. In embodiments of this application, both the first device and the second device send SCI for channel resource reservation, to resolve a hidden terminal problem and an exposed terminal problem.

## Description

This application claims priority to Chinese Patent Application No. 202011210192.0, filed with the China National Intellectual Property Administration on November 3, 2020 and entitled "RESOURCE RESERVATION AND SELECTION METHOD", and claims priority to Chinese Patent Application No. 202110153049.0, filed with the China National Intellectual Property Administration on February 3, 2021 and entitled "RESOURCE PROCESSING METHOD AND APPARATUS AND STORAGE MEDIUM", which are incorporated herein by reference in their entireties.

### TECHNICAL FIELD

This application relates to the field of communication technologies, and in particular, to a resource processing method and apparatus and a storage medium.

### BACKGROUND

In 3GPP sidelink (Sidelink, SL) R16, there are two resource allocation modes: a mode (Mode) 1 and a mode 2. In the mode 1, a sidelink device in coverage of a base station (gNB) needs to apply, by using physical layer signaling, media access control layer (Media Access Control) signaling, or radio resource control (Radio Resource Control, RRC) signaling, to the base station for a resource for data transmission. The sidelink device is also referred to as sidelink user equipment (user equipment, UE). The base station allocates a specific time-frequency resource to a sidelink transmit device (transmit device for short) and a sidelink receive device (receive device for short) corresponding to the sidelink transmit device for data transmission. Because in the mode 1, a base station performs centralized resource scheduling for all sidelink transmission, interference and conflict problems on a sidelink network can be effectively avoided. However, in the mode 1, resource allocation mainly depends on the base station, and a long delay is caused by a plurality of interactions needed in a process of applying for a resource by a sidelink device. The mode 1 is not applicable to some scenarios without a base station or with a demanding delay requirement, for example, the Internet of Vehicles (Vehicle to Everything, V2X).

In the mode 2, a resource for sidelink transmission is determined by a transmit device through channel sensing and selection (sensing and selection). For example, when sending information, each transmit device indicates, in first-stage sidelink control information (Sidelink control information, SCI) bound to the transmit device, a time-frequency resource occupied by the transmit device. The indicated time-frequency resource includes two parts. A first part is a resource reserved for initial transmission and hybrid automatic repeat request (Hybrid Automatic Repeat reQuest, HARQ) retransmission of data on a current physical sidelink shared channel (Physical sidelink shared channel, PSSCH). A second part is a time-frequency resource reserved for periodic service data. Based on this, before sending data, a transmit device needs to detect SCI of another sidelink device in a sensing window (sensing window) to determine an available time-frequency resource. If it is detected that a received power of the SCI exceeds a power threshold associated with a priority of the SCI, a resource reserved through the SCI is removed from a resource pool. After all reserved resources are removed, if a proportion of remaining resources in total resources of the resource pool is less than a first preset value (for example, 0.2), power thresholds associated with priorities are increased by a second preset value (for example, 3 dB), and then the foregoing steps are repeated until the proportion of remaining resources in the total resources of the resource pool is not less than the first preset value. Finally, a time-frequency resource position is selected on an available resource based on a sensing result to send data. In the mode 2, resource allocation is independently completed by each sidelink device without scheduling performed by a base station. Therefore, the mode 2 can be applied to scenarios more widely. In addition, sensing and selection behaviors are both performed locally on each sidelink device, so that a very short time period is needed, and response to a service is quick.

However, the resource allocation solution in the mode 2 is a distributed solution, and a resource sensing process and a resource reservation process (SCI sending) are performed only on each transmit device. Due to different positions and channel environments of the transmit device and a receive device, the sensing result of the transmit device may not necessarily ensure rationality of resource allocation in a sidelink scenario, and may even cause a hidden terminal problem and an exposure problem.

### SUMMARY

In view of this, a resource processing method and apparatus and a storage medium are provided. In embodiments of this application, a transmit device and a receive device both send SCI to reserve a channel resource, and both perform sensing and detection, so that a resource allocation solution in a sidelink scenario is enhanced, thereby resolving a hidden terminal problem and an exposed terminal problem, reducing sidelink interference and conflicts, and improving spatial multiplexing efficiency on a sidelink.

According to a first aspect, an embodiment of this application provides a resource processing method, applied to a first device. The method includes:
receiving first SCI, where a type of the first SCI is a first type, the first SCI includes first indication information, the first indication information indicates a first time-frequency resource, and the first indication information further indicates the first device to send second SCI; and
sending the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In this implementation, the first indication information included in the first SCI indicates a first time-frequency resource. The first time-frequency resource is a time-frequency resource reserved for the second device for sending data to the first device, or indicates a time-frequency resource that reserved for the second device for sending data to the first device and that is reserved for the first device for receiving data. Before the first device sends the second SCI, the first SCI indicates, to another device, that the first time-frequency resource is a time-frequency resource that is reserved for the second device for sending data to the first device and that is reserved for the first device for receiving data. The another device is interfered by the second device when receiving data on the first time-frequency resource, and may interfere with, when sending data on the first time-frequency resource, the receiving performed by the first device. After the first device sends the second SCI, the first SCI indicates, to the another device, that the first time-frequency resource is a time-frequency resource reserved from the second device for sending data to the first device, and receiving data on the first time-frequency resource is interfered by the second device. Because the second SCI has indicated a sending behavior of the another device, the first SCI does not indicate the sending behavior of the another device any more. The second indication information included in the second SCI indicates a second time-frequency resource. The second time-frequency resource is a time-frequency resource reserved for the first device for receiving data, to indicate, to the another device, that sending data on the second time-frequency resource interferes with the first device, and a receiving behavior of the another device is not indicated. In this solution, a resource allocation solution in a sidelink scenario is enhanced. Both a transmit device (that is, the second device) and a receive device (that is, the first device) send SCI, so that a resource can be reserved at both a transmit side and a receive side, thereby resolving a hidden terminal problem, and reducing sidelink interference and conflicts. In addition, resource reservation by the transmit device does not affect a sending behavior of another device, and resource reservation by the receive device does not affect a receiving behavior of another device, thereby resolving an exposed terminal problem and improving spatial multiplexing efficiency on a sidelink.

In a possible implementation, the first SCI further includes indication information of a first service priority of the data, information indicating a device identifier of the first device, and information indicating a device identifier of the second device; and the second SCI further includes indication information of a second service priority of the data and the information indicating the device identifier of the second device, and the second service priority is determined based on the first service priority.

In this implementation, the first SCI and the second SCI further include other indication information, to ensure data transmission effects of the first SCI and the second SCI.

In another possible implementation, an absolute value of a difference between a moment at which the first device sends the second SCI and a moment at which the first device receives the first SCI is less than or equal to a first time threshold, and the first time threshold is configured by a network by default.

In this implementation, an absolute value of a difference between a moment at which the first device sends the second SCI and a moment at which the first device receives the first SCI is less than or equal to a first time threshold. To be specific, after receiving the first SCI, the first device needs to send the second SCI within the first time threshold, to ensure that another device determines, based on a difference between a receiving time of the first SCI and a current time, whether the first device has sent the second SCI, to determine that a resource reserved through the first SCI is a resource reserved only for the second device for sending data, or a resource reserved for the first device for receiving data and for the second device for sending data.

In another possible implementation, the first SCI further includes a first identifier, and the first identifier indicates the first device to send the second SCI.

In this implementation, the first SCI further includes a first identifier that indicates the first device to send the second SCI, so that the first device sends the second SCI after receiving the first SCI including the first identifier. This provides a possible implementation of triggering sending of the second SCI.

In another possible implementation, the first SCI further includes a second identifier, and the second identifier indicates that the type of the first SCI is the first type.

In this implementation, the first SCI further includes a second identifier indicating that the type of the first SCI is the first type, so that when receiving the first SCI including the second identifier, the first device or another device determines that the type of the first SCI is the first type, and the another device is a device other than the first device and the second device.

In another possible implementation, after the sending second SCI, the method further includes:
receiving third SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device; and
sending fourth SCI, where a type of the fourth SCI is the second type, the fourth SCI includes fourth indication information, and the fourth indication information indicates a fourth time-frequency resource.

In this implementation, the first device sends the second SCI. After receiving the second SCI, the second device indicates, in subsequently sent SCI, that the SCI is third SCI, a type of the third SCI is a third type, the third SCI includes third indication information, and the third indication information indicates a third time-frequency resource, to indicate, to another device through the third indication information, that the first device has sent the second SCI. This can invalidate receive resource reservation performed through the first SCI. To be specific, in this case, the first time-frequency resource indicated by the first SCI is only the time-frequency resource reserved for the second device for sending data to the first device, and is not a time-frequency resource reserved for the first device for receiving data. Therefore, the third time-frequency resource is a time-frequency resource reserved for the second device for sending data to the first device. The fourth time-frequency resource is a time-frequency resource reserved for the first device for receiving data. The first time-frequency resource includes the third time-frequency resource. The third time-frequency resource includes the fourth time-frequency resource.

In this implementation, the second device sends the third SCI to reserve a resource for a sending behavior of the second device, so that another device receiving the first SCI and the third SCI may share a time-frequency resource with the second device for data sending when interference of the another device to the second device is not greater than a threshold, thereby avoiding an exposed terminal problem, and improving spatial multiplexing efficiency on a sidelink.

In another possible implementation, the third SCI further includes indication information of a first service priority of the data, information indicating a device identifier of the first device, and information indicating a device identifier of the second device.

The fourth SCI further includes indication information of a second service priority of the data and the information indicating the device identifier of the second device.

In this implementation, the third SCI and the fourth SCI further include other indication information, to ensure data transmission effects of the third SCI and the fourth SCI.

In another possible implementation, the third SCI further includes a first identifier, and the first identifier indicates the first device to send fourth SCI.

In this implementation, the third SCI further includes a first identifier that indicates the first device to send the fourth SCI, so that the first device sends the fourth SCI after receiving the third SCI including the first identifier. This provides a possible implementation of triggering sending of the fourth SCI.

In another possible implementation, the third SCI further includes a second identifier, and the second identifier indicates that the type of the third SCI is the third type.

In this implementation, the third SCI further includes a second identifier indicating that the type of the third SCI is the third type, so that when receiving the third SCI including the second identifier, the first device or the another device determines that the type of the third SCI is the third type.

In another possible implementation, before the receiving the first SCI, the method further includes:
determining historical SCI in a window, where a type of the historical SCI includes the first type, or a type of the historical SCI includes the first type and the third type;
determining auxiliary information based on a preconfigured target resource pool, the historical SCI, and a second predefined rule, where the auxiliary information includes a target receive time-frequency resource usable by the first device for receiving information; and
reporting the auxiliary information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; and SCI of the third type includes seventh indication information, the seventh indication information indicates a seventh time-frequency resource, and the seventh time-frequency resource is a time-frequency resource reserved for the transmit device for sending data.

In this implementation, the first device determines and reports auxiliary information based on a preconfigured target resource pool, the historical SCI, and a second predefined rule. The auxiliary information includes the target receive time-frequency resource usable by the first device for receiving information, to help the second device to perform subsequent resource selection.

In another possible implementation, the second predefined rule includes:

If a received power of the SCI of the first type is greater than a first power threshold, and the SCI of the first type does not include the device identifier of the first device, the target receive time-frequency resource does not include the fifth time-frequency resource.

In this implementation, a possible resource selection mechanism is provided for the first device to select the target receive time-frequency resource, to help the second device to perform subsequent resource selection, thereby further improving reliability of data transmission.

In another possible implementation, the second predefined rule includes:

If a received power of the SCI of the first type is greater than a first power threshold, and the SCI of the first type does not include the device identifier of the first device, the target receive time-frequency resource does not include the fifth time-frequency resource.

If a received power of the SCI of the third type is greater than a third power threshold, and the SCI of the third type does not include the device identifier of the first device, the target receive time-frequency resource does not include the seventh time-frequency resource.

In this implementation, a possible resource selection mechanism is provided for the first device to select the target receive time-frequency resource, to help the second device to perform subsequent resource selection, thereby further improving reliability of data transmission.

In another possible implementation, the first power threshold is determined based on indication information of a service priority included in the SCI of the first type; and/or the third power threshold is determined based on indication information of a service priority included in the SCI of the third type.

In this implementation, the first power threshold is determined based on indication information of a service priority included in the SCI of the first type, and the third power threshold is determined based on indication information of a service priority included in the SCI of the third type, to perform quality of service protection on services with different priorities to some extent.

According to a second aspect, an embodiment of this application provides a resource processing method, applied to a second device. The method includes:
sending first SCI, where a type of the first SCI is a first type, the first SCI includes first indication information, the first indication information indicates a first time-frequency resource, and the first indication information further indicates a first device to send second SCI; and
receiving the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In a possible implementation, the first SCI further includes indication information of a first service priority of the data, information indicating a device identifier of the first device, and information indicating a device identifier of the second device.

The second SCI further includes indication information of a second service priority of the data and the information indicating the device identifier of the second device, and the second service priority is determined based on the first service priority.

In another possible implementation, an absolute value of a difference between a moment at which the first device sends the second SCI and a moment at which the first device receives the first SCI is less than or equal to a first time threshold, and the first time threshold is configured by a network by default.

In another possible implementation, the first SCI further includes a first identifier, and the first identifier indicates the first device to send the second SCI.

In another possible implementation, the first SCI further includes a second identifier, and the second identifier indicates that the type of the first SCI is the first type.

In another possible implementation, after the receiving the second SCI, the method further includes:
sending third SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device; and
receiving fourth SCI, where a type of the fourth SCI is the second type, the fourth SCI includes fourth indication information, and the fourth indication information indicates a fourth time-frequency resource.

In another possible implementation, the third time-frequency resource is a time-frequency resource reserved for the second device for sending data to the first device, and the fourth time-frequency resource is a time-frequency resource reserved for the first device for receiving data.

The first time-frequency resource includes the third time-frequency resource, and the third time-frequency resource includes the fourth time-frequency resource.

In another possible implementation, the third SCI further includes indication information of a first service priority of the data, information indicating a device identifier of the first device, and information indicating a device identifier of the second device.

The fourth SCI includes indication information of a second service priority of the data and the information indicating the device identifier of the second device.

In another possible implementation, the third SCI further includes a first identifier, and the first identifier indicates the first device to send the fourth SCI.

In another possible implementation, the third SCI further includes a second identifier, and the second identifier indicates that the type of the third SCI is the third type.

In another possible implementation, before the sending the first SCI, the method further includes:
determining historical SCI in a window, where a type of the historical SCI includes the first type and the second type, or a type of the historical SCI includes the first type, the second type, and the third type; and
determining, based on a preconfigured target resource pool, the historical SCI, and a first predefined rule, a target transmit time-frequency resource for sending information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; SCI of the second type includes sixth indication information, the sixth indication information indicates a sixth time-frequency resource, and the sixth time-frequency resource is a time-frequency resource reserved for the receive device for receiving data; and SCI of the third type includes seventh indication information, the seventh indication information indicates a seventh time-frequency resource, and the seventh time-frequency resource is a time-frequency resource reserved for the transmit device for sending data.

In this implementation, the second device determines, based on a preconfigured target resource pool, the historical SCI, and a first predefined rule, a target transmit time-frequency resource used to send the information, to help the second device to perform subsequent resource selection.

In another possible implementation, the first predefined rule includes:

If a received power of the SCI of the first type is greater than a first power threshold, an absolute value of a difference between a receiving moment of the SCI of the first type and a current moment is less than a first time threshold, and the historical SCI does not include any other SCI of the first type satisfying a first preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In this implementation, a possible resource selection mechanism is provided for the second device to select the target transmit time-frequency resource, to help the second device to perform subsequent resource selection, thereby further improving reliability of data transmission.

In another possible implementation, the first preset condition is: The other SCI of the first type and the SCI of the first type include same information indicating an identifier of the transmit device, same information indicating an identifier of the receive device, and same information indicating a service priority, a time-frequency resource indicated by the other SCI of the first type includes the time-frequency resource indicated by the SCI of the first type, and a difference between the receiving moment of the SCI of the first type and a receiving moment of the other SCI of the first type is greater than the first time threshold.

In this implementation, the first predefined rule is further refined, and a possible manner of setting the first preset condition is provided, thereby further optimizing a resource selection mechanism of the target transmit time-frequency resource.

In another possible implementation, the first predefined rule includes:

If a received power of the SCI of the first type is greater than a first power threshold, and the historical SCI does not include any SCI of the third type satisfying a second preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In this implementation, another possible resource selection mechanism is provided for the second device to select the target transmit time-frequency resource, to help the second device to perform subsequent resource selection, thereby further improving reliability of data transmission.

In another possible implementation, the second preset condition is: The SCI of the first type and a specific piece of SCI of the third type include same information indicating an identifier of the transmit device and same information indicating an identifier of the receive device, and the fifth time-frequency resource includes the seventh time-frequency resource.

In this implementation, the first predefined rule is further refined, and a possible manner of setting the second preset condition is provided, thereby further optimizing a resource selection mechanism of the target transmit time-frequency resource.

In another possible implementation, the first power threshold is determined based on indication information of a service priority included in the SCI of the first type; and/or the second power threshold is determined based on indication information of a service priority included in the SCI of the second type.

In this implementation, the first power threshold is determined based on indication information of a service priority included in the SCI of the first type, and the second power threshold is determined based on indication information of a service priority included in the SCI of the second type, to perform quality of service protection on services with different priorities to some extent.

In another possible implementation, the third power threshold is determined based on indication information of a service priority included in the SCI of the third type.

According to a third aspect, a resource processing apparatus is provided. The apparatus includes at least one unit. The at least one unit is configured to implement the resource processing method according to the first aspect or any possible implementation of the first aspect.

According to a fourth aspect, a resource processing apparatus is provided. The apparatus includes at least one unit. The at least one unit is configured to implement the resource processing method according to the second aspect or any possible implementation of the second aspect.

According to a fifth aspect, an embodiment of this application provides a resource processing apparatus, applied to a first device. The apparatus includes a processor, and a memory configured to store instructions executable by the processor. The processor is configured to:
receive first SCI, where a type of the first SCI is a first type, the first SCI includes first indication information, the first indication information indicates a first time-frequency resource, and the first indication information further indicates the first device to send second SCI; and
send the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In a possible implementation, the first SCI further includes indication information of a first service priority of the data, information indicating a device identifier of the first device, and information indicating a device identifier of the second device.

The second SCI further includes indication information of a second service priority of the data and the information indicating the device identifier of the second device, and the second service priority is determined based on the first service priority.

In another possible implementation, an absolute value of a difference between a moment at which the first device sends the second SCI and a moment at which the first device receives the first SCI is less than or equal to a first time threshold, and the first time threshold is configured by a network by default.

In another possible implementation, the first SCI further includes a first identifier, and the first identifier indicates the first device to send the second SCI.

In another possible implementation, the first SCI further includes a second identifier, and the second identifier indicates that the type of the first SCI is the first type.

In another possible implementation, the processor is further configured to:
receive third SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device; and
send fourth SCI, where a type of the fourth SCI is the second type, the fourth SCI includes fourth indication information, and the fourth indication information indicates a fourth time-frequency resource.

In another possible implementation, the third time-frequency resource is a time-frequency resource reserved for the second device for sending data to the first device, and the fourth time-frequency resource is a time-frequency resource reserved for the first device for receiving data.

The first time-frequency resource includes the third time-frequency resource, and the third time-frequency resource includes the fourth time-frequency resource.

In another possible implementation, the third SCI further includes indication information of a first service priority of the data, information indicating a device identifier of the first device, and information indicating a device identifier of the second device.

The fourth SCI includes indication information of a second service priority of the data and the information indicating the device identifier of the second device.

In another possible implementation, the third SCI further includes a first identifier, and the first identifier indicates the first device to send the fourth SCI.

In another possible implementation, the third SCI further includes a second identifier, and the second identifier indicates that the type of the third SCI is the third type.

In another possible implementation, the processor is further configured to:
determine historical SCI in a window, where a type of the historical SCI includes the first type, or a type of the historical SCI includes the first type and the third type;
determine auxiliary information based on a preconfigured target resource pool, the historical SCI, and a second predefined rule, where the auxiliary information includes a target receive time-frequency resource usable by the first device for receiving information; and
report the auxiliary information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; and SCI of the third type includes seventh indication information, the seventh indication information indicates a seventh time-frequency resource, and the seventh time-frequency resource is a time-frequency resource reserved for the transmit device for sending data.

In another possible implementation, the second predefined rule includes:

If a received power of the SCI of the first type is greater than a first power threshold, and the SCI of the first type does not include the device identifier of the first device, the target receive time-frequency resource does not include the fifth time-frequency resource.

In another possible implementation, the second predefined rule includes:

If a received power of the SCI of the first type is greater than a first power threshold, and the SCI of the first type does not include the device identifier of the first device, the target receive time-frequency resource does not include the fifth time-frequency resource.

If a received power of the SCI of the third type is greater than a third power threshold, and the SCI of the third type does not include the device identifier of the first device, the target receive time-frequency resource does not include the seventh time-frequency resource.

In another possible implementation, the first power threshold is determined based on indication information of a service priority included in the SCI of the first type; and/or the third power threshold is determined based on indication information of a service priority included in the SCI of the third type.

According to a sixth aspect, an embodiment of this application provides a resource processing apparatus, applied to a second device. The apparatus includes a processor, and a memory configured to store instructions executable by the processor. The processor is configured to:
send first SCI, where a type of the first SCI is a first type, the first SCI includes first indication information, the first indication information indicates a first time-frequency resource, and the first indication information further indicates a first device to send second SCI; and
receive the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In a possible implementation, the first SCI further includes indication information of a first service priority of the data, information indicating a device identifier of the first device, and information indicating a device identifier of the second device.

The second SCI further includes indication information of a second service priority of the data and the information indicating the device identifier of the second device, and the second service priority is determined based on the first service priority.

In another possible implementation, an absolute value of a difference between a moment at which the first device sends the second SCI and a moment at which the first device receives the first SCI is less than or equal to a first time threshold, and the first time threshold is configured by a network by default.

In another possible implementation, the first SCI further includes a first identifier, and the first identifier indicates the first device to send the second SCI.

In another possible implementation, the first SCI further includes a second identifier, and the second identifier indicates that the type of the first SCI is the first type.

In another possible implementation, the processor is further configured to:
send third SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device; and
receive fourth SCI, where a type of the fourth SCI is the second type, the fourth SCI includes fourth indication information, and the fourth indication information indicates a fourth time-frequency resource.

In another possible implementation, the third time-frequency resource is a time-frequency resource reserved for the second device for sending data to the first device, and the fourth time-frequency resource is a time-frequency resource reserved for the first device for receiving data.

The first time-frequency resource includes the third time-frequency resource, and the third time-frequency resource includes the fourth time-frequency resource.

In another possible implementation, the third SCI further includes indication information of a first service priority of the data, information indicating a device identifier of the first device, and information indicating a device identifier of the second device.

The fourth SCI includes indication information of a second service priority of the data and the information indicating the device identifier of the second device.

In another possible implementation, the third SCI further includes a first identifier, and the first identifier indicates the first device to send the fourth SCI.

In another possible implementation, the third SCI further includes a second identifier, and the second identifier indicates that the type of the third SCI is the third type.

In another possible implementation, the processor is further configured to:
determine historical SCI in a window, where a type of the historical SCI includes the first type and the second type, or a type of the historical SCI includes the first type, the second type, and the third type; and
determine, based on a preconfigured target resource pool, the historical SCI, and a first predefined rule, a target transmit time-frequency resource for sending information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; SCI of the second type includes sixth indication information, the sixth indication information indicates a sixth time-frequency resource, and the sixth time-frequency resource is a time-frequency resource reserved for the receive device for receiving data; and SCI of the third type includes seventh indication information, the seventh indication information indicates a seventh time-frequency resource, and the seventh time-frequency resource is a time-frequency resource reserved for the transmit device for sending data.

In another possible implementation, the first predefined rule includes:

If a received power of the SCI of the first type is greater than a first power threshold, an absolute value of a difference between a receiving moment of the SCI of the first type and a current moment is less than a first time threshold, and the historical SCI does not include any other SCI of the first type satisfying a first preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In another possible implementation, the first preset condition is: The other SCI of the first type and the SCI of the first type include same information indicating an identifier of the transmit device, same information indicating an identifier of the receive device, and same information indicating a service priority, a time-frequency resource indicated by the other SCI of the first type includes the time-frequency resource indicated by the SCI of the first type, and a difference between the receiving moment of the SCI of the first type and a receiving moment of the other SCI of the first type is greater than the first time threshold.

In another possible implementation, the first predefined rule includes:

If a received power of the SCI of the first type is greater than a first power threshold, and the historical SCI does not include any SCI of the third type satisfying a second preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In another possible implementation, the second preset condition is: The SCI of the first type and a specific piece of SCI of the third type include same information indicating an identifier of the transmit device and same information indicating an identifier of the receive device, and the fifth time-frequency resource includes the seventh time-frequency resource.

In another possible implementation, the first power threshold is determined based on indication information of a service priority included in the SCI of the first type; and/or the second power threshold is determined based on indication information of a service priority included in the SCI of the second type.

According to a seventh aspect, an embodiment of this application provides a computer program product, including computer-readable code or a nonvolatile computer-readable storage medium carrying computer-readable code. When the computer-readable code is run in an electronic device, a processor in the electronic device performs the resource processing method according to the first aspect or any possible implementation of the first aspect.

According to an eighth aspect, an embodiment of this application provides a computer program product, including computer-readable code or a nonvolatile computer-readable storage medium carrying computer-readable code. When the computer-readable code is run in an electronic device, a processor in the electronic device performs the resource processing method according to the second aspect or any possible implementation of the second aspect.

According to a ninth aspect, an embodiment of this application provides a nonvolatile computer-readable storage medium. The nonvolatile computer-readable storage medium stores computer program instructions. When the computer program instructions are executed by a processor, the resource processing method according to the first aspect or any possible implementation of the first aspect is implemented.

According to a tenth aspect, an embodiment of this application provides a nonvolatile computer-readable storage medium. The nonvolatile computer-readable storage medium stores computer program instructions. When the computer program instructions are executed by a processor, the resource processing method according to the second aspect or any possible implementation of the second aspect is implemented.

According to an eleventh aspect, an embodiment of this application provides a resource processing system. The resource processing system includes a first device and a second device. The first device is configured to perform the resource processing method according to the first aspect or any possible implementation of the first aspect. The second device is configured to perform the resource processing method according to the second aspect or any possible implementation of the second aspect.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a schematic diagram of a principle of a possible resource processing method in a related technology;
FIG. 2 is a schematic diagram of a principle of another possible resource processing method in a related technology;
FIG. 3 is a schematic diagram of a network architecture to which an embodiment of this application may be applied;
FIG. 4 is a schematic diagram of another network architecture to which an embodiment of this application may be applied;
FIG. 5 is a schematic diagram of another network architecture to which an embodiment of this application may be applied;
FIG. 6 is a flowchart of a resource processing method according to an example embodiment;
FIG. 7 is a flowchart of a resource processing method according to another example embodiment;
FIG. 8 is a flowchart of a resource processing method according to another example embodiment;
FIG. 9 is a flowchart of a resource processing method according to another example embodiment;
FIG. 10 is a flowchart of a resource processing method according to another example embodiment;
FIG. 11 is a block diagram of a resource processing apparatus according to an example embodiment of this application; and
FIG. 12 is a schematic diagram of a structure of a first device according to an example embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "illustrative" is not necessarily explained as being superior or better than other embodiments.

In addition, to better describe this application, numerous specific details are given in the following specific implementations. Persons skilled in the art should understand that this application can also be implemented without some specific details. In some embodiments, methods, means, elements and circuits that are well-known to persons skilled in the art are not described in detail, so that the subject matter of this application is highlighted.

In a related technology, in 3GPP sidelink R16, when a resource allocation mode is a mode 2, each transmit device indicates, when sending data, a reserved time-frequency resource on SCI bound to the transmit device. For example, the SCI is first-stage SCI (SCI-1), and the SCI-1 includes indication information. A time-frequency resource indicated by the indication information includes two parts. The first part is a resource reserved for initial transmission and HARQ retransmission of data on a current PSSCH. The second part is a time-frequency resource reserved for periodic service data. Based on this, before sending data, a transmit device needs to detect SCI of another sidelink device in a sensing window to determine an available time-frequency resource, and selects a time-frequency resource position from available resources based on a sensing result to send data. The resource allocation solution in the mode 2 is a distributed solution, and a resource sensing process and a resource reservation process are performed only on each transmit device. Due to different positions and channel environments of the transmit device and the receive device, a sensing result of the transmit device may not necessarily ensure rationality and accuracy of resource allocation in a sidelink scenario, and may even cause a hidden terminal problem and an exposed terminal problem.

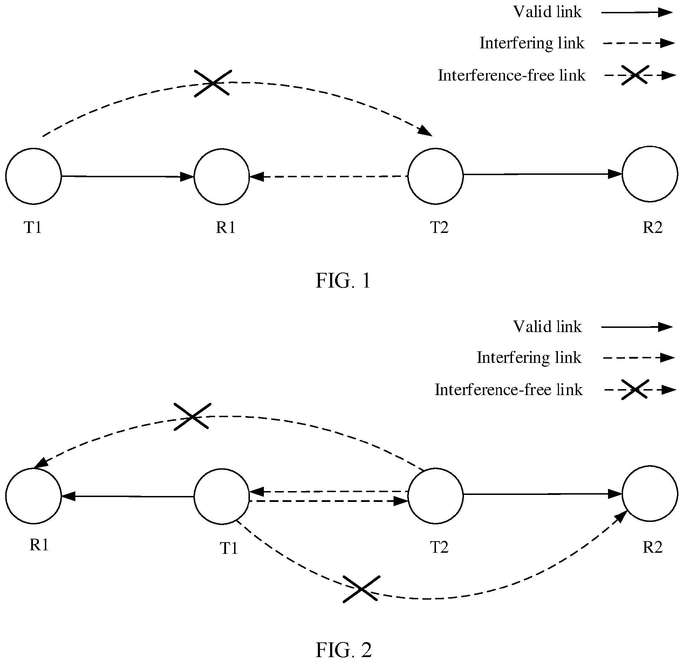

In an example, as shown in FIG. 1, a transmit device T1 is sending data to a receive device R1, and indicates, on SCI sent by the transmit device T1, that a time-frequency resource S1 has been reserved. At the same time, a transmit device T2 needs to send data to a receive device R2. However, in the existing mode 2, because T2 is far away from T1, and T2 cannot detect SCI sent by T1, T2 may consider that the time-frequency resource S1 is available, and therefore, sends data to R2 on the time-frequency resource S1, that is, on the same time-frequency resource. Because T2 is close to R1, R1 is strongly interfered by T2, and cannot receive the data sent by T1, a hidden terminal problem is caused.

For another example, as shown in FIG. 2, a transmit device T1 is sending data to a receive device R1, and indicates, on SCI sent by the transmit device T 1, that a time-frequency resource S1 has been reserved. At the same time, a transmit device T2 needs to send data to a receive device R2. However, in the existing mode 2, because T2 is close to T1, and T2 detects SCI sent by T1, T2 considers that the time-frequency resource S1 is occupied, and therefore, cannot send data to R2 on the time-frequency resource S1, that is, the same time-frequency resource. However, actually, in this topological structure, T2 cannot interfere with R1, and T1 cannot interfere with R2 either. To be specific, spatial multiplexing can be implemented when T1 sends data to R1 and T2 sends data to R2. However, an exposed terminal problem is caused by T2 overly conservatively determining interference due to an SCI indication of T1.

Embodiments of this application provide a resource processing method. Both a transmit device and a receive device send SCI to reserve a channel resource, to avoid a hidden terminal problem and improve transmission reliability. In addition, in resource sensing and selection phases, both a transmit side and a receive side determine interference on different resources, which helps to select a channel with less interference for sending. In addition, the transmit side and the receive side distinguish between transmit interference and receive interference, thereby avoiding an exposed terminal problem, improving spatial multiplexing efficiency on a sidelink, and improving spectral efficiency.

Technical solutions of embodiments of this application can be applied to various communication systems, for example, wireless fidelity (Wi-Fi), worldwide interoperability for microwave access (Worldwide Interoperability for Microwave Access, WiMAX), a global system for mobile communications (Global System for Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution advanced (Advanced long term evolution, LTE-A) system, a universal mobile telecommunications system (Universal Mobile Telecommunications System, UMTS), a 3rd generation partnership project (The 3rd Generation Partnership Project, 3GPP)-related cellular system, and a fifth generation mobile communication system (The Fifth Generation, 5G). Embodiments of this application may be applied to a 5G sidelink system or a 5G evolved sidelink system. This is not limited in embodiments of this application.

Technical solutions in embodiments of this application may be applied to various possible service scenarios, for example, scenarios such as the Internet of Vehicles (Vehicle to Everything, V2X), a smart home, and a smart factory. This is not limited in embodiments of this application.

The network architecture and the service scenario described in embodiments of this application are intended to describe the technical solutions in embodiments of this application more clearly, and do not constitute a limitation on the technical solutions provided in embodiments of this application. Persons of ordinary skill in the art may know that as the network architecture evolves and a new service scenario emerges, the technical solutions provided in embodiments of this application are also applicable to similar technical problems.

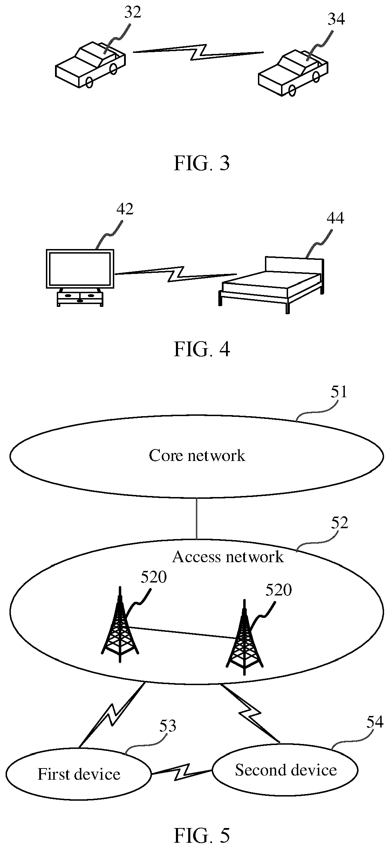

FIG. 3 is a schematic diagram of a network architecture to which an embodiment of this application may be applied. The network architecture may be a network architecture of a V2X system. The V2X system is an in-vehicle wireless communication system. The network architecture may include a first vehicle 32 and a second vehicle 34.

The vehicle (the first vehicle 32 or the second vehicle 34) may be an autonomous vehicle, or may be a non-autonomous vehicle. A vehicle includes an in-vehicle device. The vehicle communicates with other vehicles, terminals, or other devices such as a road side unit (Road Side Unit, RSU). The in-vehicle device may also be referred to as an in-vehicle terminal, an in-vehicle communication apparatus, or another name. This is not limited in embodiments of this application.

In an Internet of Vehicles service scenario, a first device is an in-vehicle device of the first vehicle 32, and a second device is an in-vehicle device of the second vehicle 34. The first device and the second device are devices at two sides performing sidelink communication. A sidelink may be established between the first device and the second device through a sidelink communication interface (for example, a PC5 interface), and then user plane data and control plane signaling are exchanged through the sidelink. Compared with communication based on a Uu interface, communication based on a sidelink communication interface has features such as a short delay and low overheads, and is suitable for communication between an in-vehicle device and another nearby device that is geographically close to the in-vehicle device.

The network architecture shown in FIG. 3 may implement a V2X service scenario. The network architecture may further include devices such as an RSU, a V2X application server, and a V2X control function node. This is not limited in embodiments of this application.

FIG. 4 is a schematic diagram of another network architecture to which an embodiment of this application may be applied. The network architecture may be a network architecture of a smart home system. The network architecture may include a first smart home device 42 and a second smart home device 44.

A smart home device (the first smart home device 42 or the second smart home device 44) includes an intelligent device that exchanges information through a wireless communication technology, or even can perform self-learning. The smart home device can provide a convenient and effective service for a user, and reduce a labor amount of the user. For example, the smart home device may include a smart socket, a smart lock, a smart lamp, a smart fan, a smart air conditioner, a smart curtain, and the like.

In a smart home service scenario, the first device is a first smart home device 42, and the second device is a second smart home device 44. The first device and the second device are devices at two sides performing sidelink communication. A sidelink may be established between the first device and the second device through a sidelink communication interface (for example, a PC5 interface), and then user plane data and control plane signaling are exchanged through the sidelink.

FIG. 5 is a schematic diagram of another network architecture to which an embodiment of this application may be applied. The network architecture may be a wireless communication system evolved based on a cellular network communication system like 3G, 4G, or 5G. The network architecture may include a core network 51, an access network 52, a first device 53, and a second device 54.

The core network 51 includes several core network devices. Main functions of the core network device are to provide a user connection, manage a user, complete service carrying, and act as a bearer network to provide an interface to an external network. For example, a core network of a long term evolution (Long Term Evolution, LTE) system may include devices such as a mobility management node (Mobility Management Entity, MME), a serving gateway (Serving Gateway, S-GW), and a PDN gateway (PDN Gateway, P-GW). A core network in the 5G NR system may include devices such as an access and mobility management function (Access and Mobility Management Function, AMF) entity, a user plane function (User Plane Function, UPF) entity, and a session management function (Session Management Function, SMF) entity.

The access network 52 includes several access network devices 520. The access network device 520 may be a base station, and a remaining part of the access network 52 may include an Internet Protocol (Internet Protocol, IP) network. The base station may coordinate attribute management of the air interface. For example, the base station may be a base transceiver station (Base Transceiver Station, BTS) in GSM or CDMA, or may be a NodeB (NodeB) in WCDMA, or may be an evolved NodeB (evolved NodeB, eNB or e-NodeB) in LTE, and is referred to as a gNodeB or a gNB in a 5G NR system. This is not limited in embodiments of this application.

The first device 53 and the second device 54 are devices at two sides performing sidelink communication in an Internet of Vehicles service scenario, a smart home service scenario, or another service scenario. A sidelink may be established between the first device 53 and the second device 54 through a sidelink communication interface (for example, a PC5 interface), and then user plane data and control plane signaling are exchanged through the sidelink.

For example, the first device 53 may be an in-vehicle device of the first vehicle 32 in the network architecture shown in FIG. 3, and the second device 54 may be an in-vehicle device of the second vehicle 34, or may be a terminal, an RSU, or the like.

The terminal may include various handheld devices, in-vehicle devices, wearable devices, or computing devices that have a wireless communication function, other processing devices connected to a wireless modem, or the like. For example, the terminal may be a device like a personal communications service (Personal Communications Service, PCS) phone, a cordless telephone set, a session initiation protocol (SIP) phone, a wireless local loop (Wireless Local Loop, WLL) station, or a personal digital assistant (Personal Digital Assistant, PDA). The terminal may also be referred to as a subscriber unit (Subscriber Unit), a subscriber station (Subscriber Station), a mobile station (Mobile Station), a mobile (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment). For ease of description, the devices mentioned above are collectively referred to as the terminal. The access network device 520 and the terminal communicate with each other through an air interface technology, for example, a Uu interface.

For example, the first device 53 may be the first smart home device 42 in the network architecture shown in FIG. 4, and the second device 54 may be the second smart home device 44, or may be a terminal, an RSU, or the like.

In some embodiments, a same device (for example, a same in-vehicle device, a same terminal, or a same smart home device) may be used as the first device 53 in some scenarios, and may also be used as the second device 54 in some other scenarios.

In embodiments of this application, the first device 53 is also referred to as sidelink communication receive user equipment, that is, a receive device, and the second device 54 is also referred to as sidelink communication transmit user equipment, that is, a transmit device.

In embodiments of this application, a resource processing method is provided for a sidelink communication process in the foregoing Internet of Vehicles service scenario, the foregoing smart home service scenario, or another service scenario, to resolve the foregoing hidden terminal problem and exposed terminal problem.

The following describes technical solutions of this application through several example embodiments.

It should be noted that, in embodiments of this application, classification manners of SCI include the following two manners: A possible classification manner is that types of SCI include a first type, a second type, and a third type. The other possible classification manner is that types of SCI include a first type and a second type. Meanings indicated by SCI of all types are described below.

A time-frequency resource indicated by SCI of a first type is a time-frequency resource reserved for the transmit device for sending data, or is a time-frequency resource that is reserved for the transmit device for sending data and that is reserved for the receive device for receiving data.

In the first possible case, before the receive device at a peer side of the transmit device sends SCI of a second type corresponding to the SCI of the first type, the time-frequency resource indicated by the SCI of the first type is a time-frequency resource that is reserved for the transmit device for sending data and that is reserved for the receive device at the peer side of the transmit side for receiving data, to indicate, to another device, that receiving data on the time-frequency resource is interfered by the transmit device and sending data on the time-frequency resource may interfere with the receive device at the peer side of the transmit device. The another device is a device other than the transmit device and the corresponding receive device.

In a possible implementation, if the another device receives one piece of SCI of the first type and does not receive, within a first time threshold, SCI of the second type corresponding to the SCI of the first type, indicating that SCI that is of the second type and that corresponds to the SCI of the first type may not be sent, it is determined that the time-frequency resource indicated by the SCI of the first type is a time-frequency resource that is reserved for the transmit device for sending data and that is reserved for the receive device at the peer side of the transmit device for receiving data.

In the second possible case, after the receive device at the peer side of the transmit device sends SCI of the second type corresponding to SCI of the first type, a time-frequency resource indicated by the SCI of the first type is a time-frequency resource reserved for the transmit device for sending data, to indicate, to another device, that receiving data on the time-frequency resource is interfered by the transmit device, but whether the another device can send data on the time-frequency resource is not indicated.

In a possible implementation, if the another device receives one piece of SCI of the first type and receives, within a first time threshold, SCI of the second type corresponding to the SCI of the first type, indicating that SCI that is of the second type and that corresponds to the SCI of the first type has been sent, it is determined that the time-frequency resource indicated by the SCI of the first type is a time-frequency resource that is reserved for the transmit device for sending data.

In another possible implementation, if the another device receives two pieces of SCI of the first types, and an interval between the two pieces of SCI of the first types is greater than a first time threshold, it indicates that two pieces of SCI of the second type corresponding to the two pieces of SCI of the first type have been sent, and it is determined that the time-frequency resource indicated by the SCI of the first type is a time-frequency resource reserved for the transmit device for sending data.

In a possible implementation, if the another device receives one piece of SCI of the first type, does not receive, within a first time threshold, SCI of the second type corresponding to the SCI of the first type, and receives another piece of SCI of the first type before a receiving moment of the SCI of the first type, indicating that SCI that is of the second type and that corresponds to the SCI of the first type has been sent, it is determined that the time-frequency resource indicated by the SCI of the first type is a time-frequency resource that is reserved for the transmit device for sending data.

The time-frequency resource indicated by the SCI of the second type is a time-frequency resource reserved for the receive device for receiving data. The SCI of the second type indicates, to the another device, that sending data on the time-frequency resource may cause interference to the receive device, but whether the another device can receive data on the time-frequency resource is not indicated.

The time-frequency resource indicated by the SCI of the third type is a time-frequency resource reserved for the transmit device for sending the data. The SCI of the third type indicates, to another receive device, that receiving data on the time-frequency resource is interfered by the transmit device, but whether the another device can send data on the time-frequency resource is not indicated. A difference between the SCI of the third type and the SCI of the first type includes at least the following: The SCI of the first type indicates the receive device at the peer side of the transmit device to send SCI of the second type. The SCI of the third type indicates to another device that the receive device at the peer side of the transmit device has sent the SCI of the second type. The another device is a device other than the transmit device and the corresponding receive device. Because the transmit device sends the SCI of the third type only after receiving the SCI of the second type sent by the receive device at the peer side of the transmit device, and the SCI of the second type has indicated a sending behavior of another device, the SCI of the third type does not indicate a sending behavior of the another device.

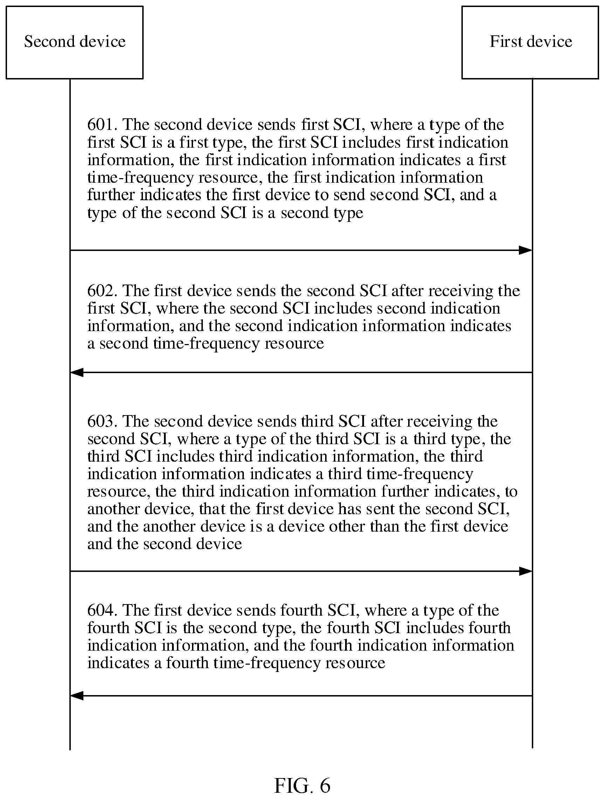

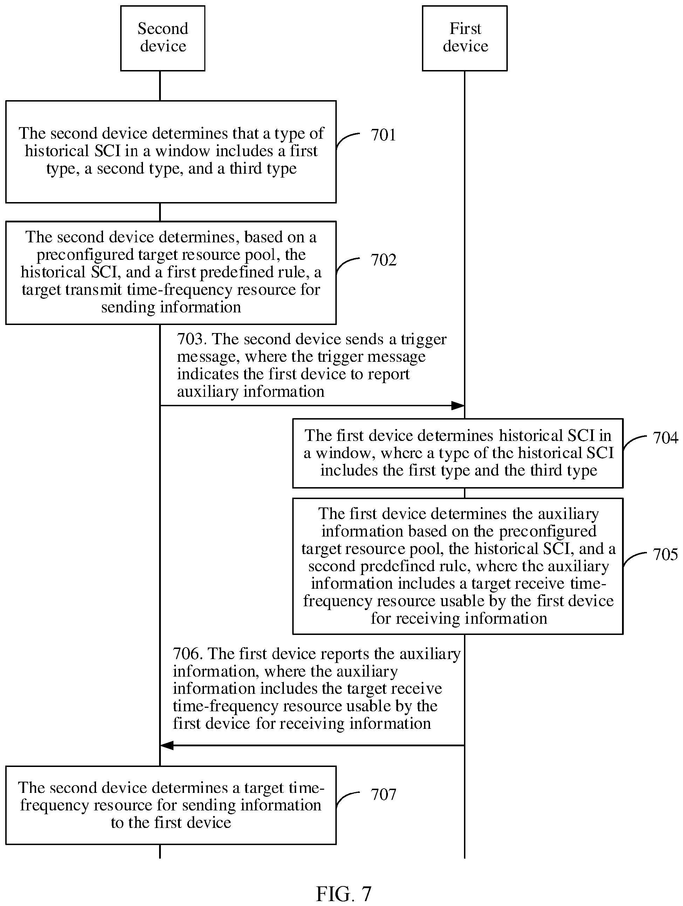

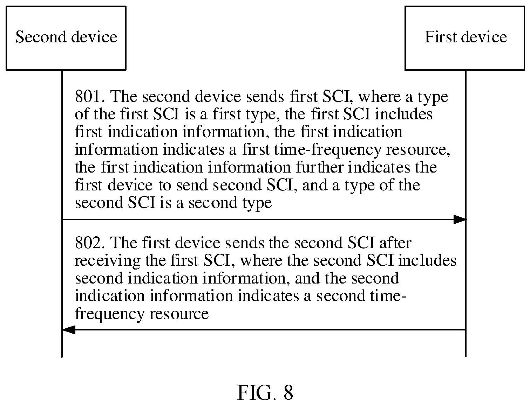

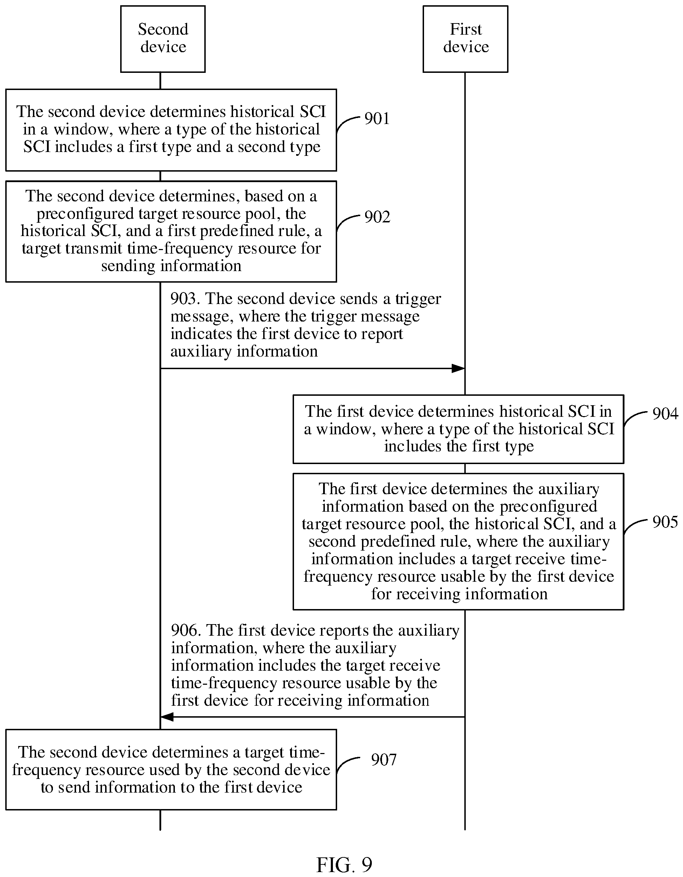

Therefore, based on the foregoing first possible classification manner, technical solutions of this application are described by using the embodiments provided in FIG. 6 and FIG. 7. Based on the foregoing second possible classification manner, technical solutions of this application are described by using the embodiments provided in FIG. 8 and FIG. 9.

FIG. 6 is a flowchart of a resource processing method according to an example embodiment. The method may be applied to the network architecture shown in FIG. 3, FIG. 4, or FIG. 5. The method may include the following several steps.

Step 601: A second device sends first SCI, where a type of the first SCI is a first type, the first SCI includes first indication information, the first indication information indicates a first time-frequency resource, the first indication information further indicates a first device to send second SCI, and a type of the second SCI is a second type.

The first indication information indicates a time-frequency position of the first time-frequency resource. The first time-frequency resource is a time-frequency resource reserved for the second device for sending data to the first device, or the first time-frequency resource is a time-frequency resource that is reserved for the second device for sending data to the first device and that is reserved for the first device for receiving data. The first device is a peer device of the second device.

Before the first device sends the second SCI, the first SCI indicates, to another device, that the first time-frequency resource is the time-frequency resource that is reserved for the second device for sending data to the first device and that is reserved for the first device for receiving data. The another device is interfered by the second device when receiving data on the first time-frequency resource, and may interfere with, when sending data on the first time-frequency resource, the receiving performed by the first device. After the first device sends the second SCI, the first SCI indicates, to the another device, that the first time-frequency resource is the time-frequency resource reserved for the second device for sending data to the first device, and the another device is interfered by the second device when receiving data on the first time-frequency resource, but a sending behavior of the another device is not indicated.

Optionally, the first SCI further includes indication information of a first service priority of the data, information indicating a device identifier of the first device, and information indicating a device identifier of the second device. For example, the data is periodic service data, and the reserved resource is also a periodic resource.

The device identifier of the first device uniquely identifies the first device in a plurality of devices, and the device identifier of the second device uniquely identifies the second device in the plurality of devices.

Optionally, the first SCI further includes a first identifier, and the first identifier indicates the first device to send the second SCI.

Optionally, the first SCI further includes a second identifier, and the second identifier indicates that the type of the first SCI is the first type.

Optionally, for the first SCI, a format of SCI in NR R16 may be used, and two reserved bits in first-stage SCI (SCI-1) in the format of SCI are used for the first identifier and/or the second identifier. Optionally, when one reserved bit in the two reserved bits is 1, it indicates the first device to send the second SCI; and when the bit is 0, it indicates the first device not to send the second SCI. Alternatively, when the bit is 0, it indicates the first device to send the second SCI; and when the bit is 1, it indicates the first device not to send the second SCI.

When the other reserved bit in the two reserved bits is 1, it indicates that the type of the SCI is the first type; and when the bit is 0, it indicates that the type of the SCI is a third type. Alternatively, when the bit is 0, it indicates that the type of the SCI is the first type; and when the bit is 1, it indicates that the type of the SCI is a third type.

Optionally, the first SCI and the periodic service data are sent together.

Step 602: The first device sends the second SCI after receiving the first SCI, where the second SCI includes second indication information, and the second indication information indicates a second time-frequency resource.

The second indication information indicates a time-frequency position of the second time-frequency resource. The second time-frequency resource is a time-frequency resource reserved for the first device for receiving data, and the first time-frequency resource may include the second time-frequency resource.

The first device sends the second SCI to indicate the second time-frequency resource, to indicate, to the another device, that sending data on the second time-frequency resource interferes with the first device, but a receiving behavior of the another device is not indicated.

After receiving the first SCI sent by the second device, the first device sends the second SCI. Optionally, a time-frequency resource used by the first device to send the second SCI is determined according to a sensing and selection mechanism in NR R16. Optionally, the second SCI further includes indication information of a second service priority of the data and the information indicating the device identifier of the second device, and the second service priority is determined based on the first service priority. For example, the second service priority is the same as the first service priority. For another example, the second service priority corresponding to the first service priority is determined based on a preset mapping relationship. The preset mapping relationship includes a preset mapping relationship between the first service priority and the second service priority.

After the first device sends the second SCI, the second device receives the second SCI. If the second device does not receive the second SCI within a predefined first time threshold, the foregoing steps are repeated until the second SCI is received.

Step 603: The second device sends third SCI after receiving the second SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device.

After receiving the second SCI, the second device indicates subsequently sent SCI as the third SCI, to indicate, to the another device through the third indication information of the third SCI, that the first device has sent the second SCI. This can invalidate receive resource reservation performed through the first SCI. To be specific, in this case, the first time-frequency resource indicated by the first SCI is only the time-frequency resource reserved for the second device for sending data to the first device, and is not a time-frequency resource reserved for the first device for receiving data. The third indication information indicates a time-frequency position of the third time-frequency resource. The third time-frequency resource is a time-frequency resource reserved for the second device for sending data to the first device.

The second device sends the third SCI to indicate the third time-frequency resource, to indicate, to another receive device, that receiving data on the third time-frequency resource is interfered by the second device.

Optionally, the third SCI further includes indication information of a first service priority of the data, information indicating the device identifier of the first device, and the information indicating the device identifier of the second device.

Optionally, the third SCI further includes a first identifier, and the first identifier indicates the first device to send fourth SCI.

Optionally, the third SCI further includes a second identifier, and the second identifier indicates that the type of the third SCI is the third type.

Optionally, for the third SCI, a format of SCI in NR R16 may be used, and two reserved bits in first-stage SCI (SCI-1) in the format of SCI are used for the first identifier and/or the second identifier. For a related indication manner, refer to related descriptions of the first SCI in step 601 by analogy. Details are not described herein again.

Optionally, the third SCI and the periodic service data are sent together.

Step 604: The first device sends the fourth SCI, where a type of the fourth SCI is the second type, the fourth SCI includes fourth indication information, and the fourth indication information indicates a fourth time-frequency resource.

The fourth indication information indicates a time-frequency position of the fourth time-frequency resource. The fourth time-frequency resource is a time-frequency resource reserved for the first device for receiving data.

The first device sends the fourth SCI to indicate the fourth time-frequency resource, to indicate, to the another device, that sending data on the fourth time-frequency resource interferes with the first device.

Optionally, after receiving the third SCI sent by the second device, the first device sends the fourth SCI. The third time-frequency resource includes the fourth time-frequency resource.

Optionally, the fourth SCI further includes indication information of a second service priority of the data and the information indicating the device identifier of the second device.

Optionally, the second device receives the fourth SCI sent by the first device.

Optionally, if a service characteristic of data of the second device remains unchanged (for example, a service periodicity does not change or a service does not end), step 603 and step 604 are repeatedly performed. To be specific, when sending data of a periodic service, the second device sends the third SCI to reserve a resource for a sending behavior of the second device, and the first device sends the fourth SCI to reserve a resource for a receiving behavior of the first device, to reduce sidelink interference and conflicts in a data transmission process, and improve transmission reliability. When a service characteristic of data of the second device changes (for example, a service periodicity changes or a service ends), the second device performs step 601 again, to meet a requirement of a changed service characteristic. This is not limited in embodiments of this application.

In conclusion, in the resource processing method provided in this embodiment of this application, the first indication information included in the first SCI indicates the first time-frequency resource. The first time-frequency resource is the time-frequency resource reserved for the second device for sending data to the first device, or indicates the time-frequency resource that is reserved for the second device for sending data to the first device and that is reserved for the first device for receiving data. Before the first device sends the second SCI, the first SCI indicates, to the another device, that the first time-frequency resource is the time-frequency resource that is reserved for the second device for sending data to the first device and that is reserved for the first device for receiving data. The another device is interfered by the second device when receiving data on the first time-frequency resource, and may interfere with, when sending data on the first time-frequency resource, the receiving performed by the first device. After the first device sends the second SCI, the first SCI indicates, to the another device, that the first time-frequency resource is the time-frequency resource reserved for the second device for sending data to the first device, and the another device is interfered by the second device when receiving data on the first time-frequency resource, but the sending behavior of the another device is not indicated. The second indication information included in the second SCI indicates the second time-frequency resource. The second time-frequency resource is the time-frequency resource reserved for the first device for receiving data, to indicate, to the another device, that sending data on the second time-frequency resource interferes with the first device. A transmit side and a receive side both send SCI to reserve a resource, to prevent the another device from causing strong interference to the first device, resolve a hidden terminal problem, reduce sidelink interference and conflicts, and improve transmission reliability. In addition, resource reservation performed by the receive side and the transmit side provides different indications for the receiving behavior and the sending behavior of the another device. The first device sends the second SCI to reserve a resource only for a receiving behavior of the first device. Before the first device sends the second SCI, the first SCI sent by the second device reserves a resource for the receiving behavior of the first device and a sending behavior of the second device. After the first device sends the second SCI, the second device sends the third SCI to reserve a resource for the sending behavior of the second device while indicating, to the another device, that the first device has sent the second SCI. In this case, when the another device does not receive the second SCI (or a received power of the second SCI is less than a threshold), the receive resource reservation performed through the first SCI may be invalidated. To be specific, in this case, the first time-frequency resource indicated by the first SCI is only the time-frequency resource reserved for the second device for sending data to the first device, and is not the time-frequency resource reserved for the first device for receiving data. In this way, the another device receiving the first SCI and the third SCI may share a time-frequency resource with the second device for data sending without causing severe interference to the first device, to avoid an exposed terminal problem, and improve spatial multiplexing efficiency on a sidelink.

Based on the embodiment provided in FIG. 6, the resource processing method may further include the following several steps, as shown in FIG. 7.

Step 701: The second device determines that a type of historical SCI in a window includes the first type, the second type, and the third type.

Optionally, when the second device needs to send information to the first device, the historical SCI in the window is determined, and the historical SCI is at least one piece of SCI historically received by the second device. The type of the historical SCI includes the first type, the second type, and the third type.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data.

SCI of the second type includes sixth indication information, the sixth indication information indicates a sixth time-frequency resource, and the sixth time-frequency resource is a time-frequency resource reserved for the receive device for receiving data.

SCI of the third type includes seventh indication information, the seventh indication information indicates a seventh time-frequency resource, and the seventh time-frequency resource is a time-frequency resource reserved for the transmit device for sending data.

Step 702: The second device determines, based on a preconfigured target resource pool, the historical SCI, and a first predefined rule, a target transmit time-frequency resource for sending information.

In a possible implementation, the first predefined rule includes:

If a received power of a specific piece of SCI of the first type is greater than a first power threshold, and the historical SCI does not include any SCI of the third type satisfying a second preset condition, it indicates that SCI of the second type corresponding to the first type may not be sent yet, and sending data on a fifth time-frequency resource indicated by the SCI of the first type may interfere with a receive device indicated by the SCI of the first type, and therefore, the fifth time-frequency resource is removed from the target transmit time-frequency resource. Therefore, the target transmit time-frequency resource does not include the fifth time-frequency resource. The second preset condition is for determining whether SCI that is of the second type and that corresponds to the SCI of the first type has been sent. A correspondence is that the SCI of the second type is sent after being indicated by the SCI of the first type.

If a received power of a specific piece of SCI of the second type is greater than a second power threshold, and the SCI of the second type does not include the device identifier of the second device, it indicates that sending data on a sixth time-frequency resource indicated by the SCI of the second type interferes with a receive device indicated by the SCI of the second type, and therefore, the sixth time-frequency resource is removed from the target transmit time-frequency resource. Therefore, the target transmit time-frequency resource does not include the sixth time-frequency resource.

It should be noted that, for related descriptions of the SCI of the first type, refer to related descriptions of the first SCI in the embodiment shown in FIG. 6. For related descriptions of the SCI of the second type, refer to related descriptions of the second SCI in the embodiment shown in FIG. 6. A specific piece of SCI of the second type corresponding to a specific piece of SCI of the first type is SCI of the second type sent after being indicated by the SCI of the first type. For the correspondence, refer to related descriptions of a relationship between the first SCI and the second SCI in the embodiment shown in FIG. 6 by analogy. Details are not described herein again.

Optionally, the first power threshold is preconfigured, or is determined based on indication information of a service priority included in the SCI of the first type. For example, the first power threshold is negatively correlated with the service priority included in the SCI of the first type, in other words, a higher service priority included in the SCI of the first type indicates a smaller first power threshold.

Optionally, the second power threshold is preconfigured, or is determined based on indication information of a service priority included in the SCI of the second type. For example, the second power threshold is negatively correlated with the service priority included in the SCI of the second type, in other words, a higher service priority included in the SCI of the second type indicates a smaller second power threshold.

Optionally, the second preset condition is: The SCI of the first type and a specific piece of SCI of the third type include same information indicating an identifier of the transmit device and same information indicating an identifier of the receive device, and the fifth time-frequency resource includes the seventh time-frequency resource. When the second preset condition is met, the piece of SCI of the third type corresponds to the SCI of the first type, and the correspondence is that a specific piece of SCI of the third type is a specific piece of SCI of the third type sent by a same transmit device after the same transmit device sends the SCI of the first type.

It should be noted that, for related descriptions of the SCI of the first type, refer to related descriptions of the first SCI in the embodiment shown in FIG. 6. For related descriptions of the SCI of the third type, refer to related descriptions of the third SCI in the embodiment shown in FIG. 6. A specific piece of SCI of the third type corresponding to a specific piece of SCI of the first type is a specific piece of SCI of the third type sent by a same transmit device after the same transmit device sends the SCI of the first type. For the correspondence, refer to related descriptions of a relationship between the first SCI and the third SCI in the embodiment shown in FIG. 6 by analogy. Details are not described herein again.

The transmit device sends SCI that is of the third type and that corresponds to the SCI of the first type only after receiving SCI that is of the second type and that corresponds to the SCI of the first type. When the second preset condition is met, it indicates that the receive device has sent the corresponding SCI of the second type and reserves a resource used by the receive device to receive data. Therefore, the SCI of the first type does not indicate a sending behavior of the second device.

Optionally, if a proportion of the target transmit time-frequency resource in the target resource pool is less than a predefined first threshold, the first power threshold and the second power threshold are increased, and then step 702 is performed again, to ensure that the determined target transmit time-frequency resource meets the requirement of information transmission. If a proportion of the target transmit time-frequency resource in the target resource pool is greater than or equal to a predefined first threshold, step 703 is performed. It should be noted that a manner of setting the first predefined rule is not limited in embodiments of this application.

Step 703: The second device sends a trigger message, where the trigger message indicates the first device to report auxiliary information.

The second device sends the trigger message to the first device. The trigger message indicates the first device to perform resource sensing and selection and report the auxiliary information. The auxiliary information includes a target receive time-frequency resource that can be used by the first device to receive information.

Step 704: The first device determines historical SCI in a window, where a type of the historical SCI includes a first type and a third type.

Optionally, after receiving the trigger message sent by the second device, the first device starts a resource sensing process on the first device to help the second device to perform subsequent resource selection. After starting the resource sensing process, the first device determines the historical SCI in the window, where the historical SCI is at least one piece of SCI historically received by the first device. The type of the historical SCI includes the first type and the third type.

Step 705: The first device determines the auxiliary information based on the preconfigured target resource pool, the historical SCI, and a second predefined rule, where the auxiliary information includes a target receive time-frequency resource usable by the first device for receiving information.

In a possible implementation, the second predefined rule includes:

If a received power of a specific piece of SCI of the first type is greater than a first power threshold, and the specific piece of SCI of the first type does not include the device identifier of the first device, it indicates that receiving data on a fifth time-frequency resource indicated by the SCI of the first type interferes with a transmit device indicated by the SCI of the first type, and therefore, the fifth time-frequency resource is removed from the target receive time-frequency resource. Therefore, the target receive time-frequency resource does not include the fifth time-frequency resource.

If a received power of a specific piece of SCI of the third type is greater than a third power threshold, and the specific piece of SCI of the third type does not include the device identifier of the first device, it indicates that receiving data on a seventh time-frequency resource indicated by the SCI of the third type interferes with a receive device indicated by the SCI of the third type, and therefore, the seventh time-frequency resource is removed from the target receive time-frequency resource. Therefore, the target receive time-frequency resource does not include the seventh time-frequency resource.

Optionally, the third power threshold is preconfigured, or is determined based on indication information of a service priority included in the SCI of the third type. For example, the third power threshold is negatively correlated with the service priority included in the SCI of the third type, in other words, a higher service priority included in the SCI of the third type indicates a smaller third power threshold.

Optionally, if a proportion of the target receive time-frequency resource to total resources of the target resource pool is less than a predefined second threshold, the first power threshold and the third power threshold are increased, and then step 705 is performed again, to ensure that the determined target receive time-frequency resource meets the requirement of information transmission. If a proportion of the target transmit time-frequency resource in the target resource pool is greater than or equal to a predefined second threshold, step 706 is performed.

It should be noted that a manner of setting the second predefined rule is not limited in embodiments of this application.

Step 706: The first device reports the auxiliary information, where the auxiliary information includes a target receive time-frequency resource usable by the first device for receiving information.

The first device reports the determined auxiliary information to the second device, where the auxiliary information includes the target receive time-frequency resource usable by the first device to receive information.

Step 707: The second device determines a target time-frequency resource for sending information to the first device.

After receiving the auxiliary information reported by the first device, the second device determines that the auxiliary information includes the target receive time-frequency resource, and determines, based on the determined target transmit time-frequency resource and the determined target receive time-frequency resource, a target time-frequency resource for sending information to the first device.

Optionally, both the target receive time-frequency resource and the target transmit time-frequency resource include the target time-frequency resource. In other words, the target time-frequency resource is a time-frequency resource in an intersection of the target receive time-frequency resource and the target transmit time-frequency resource.

Optionally, if a proportion of the target time-frequency resource to the total resources of the target resource pool is less than a predefined third threshold, the first power threshold, the second power threshold, and the third power threshold are increased, and then steps 702 to 707 are performed again, to ensure that the determined target time-frequency resource meets the requirement of information transmission. If a proportion of the target time-frequency resource to the total resources of the target resource pool is greater than or equal to a predefined third threshold, information is sent on the target time-frequency resource.

It should be noted that step 701 to step 705 provided in this embodiment of this application may be performed before step 601, may be performed after step 604, or may be performed in parallel to a process of performing step 601 to step 604. This is not limited in this embodiment of this application.

In conclusion, in this embodiment of this application, the second device determines, based on the preconfigured target resource pool, the historical SCI, and the first predefined rule, the target transmit time-frequency resource for sending information. The first device determines the auxiliary information based on the preconfigured target resource pool, the historical SCI, and the second predefined rule, and reports the auxiliary information. The auxiliary information includes the target receive time-frequency resource usable by the first device for receiving information. In this way, the second device can subsequently determine, based on the determined target transmit time-frequency resource and the determined target receive time-frequency resource, the target time-frequency resource used by the second device to send information to the first device, to optimize a new resource sensing and selection mechanism, and improve reliability and efficiency of data transmission.

FIG. 8 is a flowchart of a resource processing method according to another example embodiment. The method may be applied to the network architecture shown in FIG. 3, FIG. 4, or FIG. 5. The method may include the following several steps.

Step 801: A second device sends first SCI, where a type of the first SCI is a first type, the first SCI includes first indication information, the first indication information indicates a first time-frequency resource, the first indication information further indicates a first device to send second SCI, and a type of the second SCI is a second type.

The first indication information indicates a time-frequency position of the first time-frequency resource. The first time-frequency resource is a time-frequency resource reserved for the second device for sending data to the first device, or the first time-frequency resource is a time-frequency resource that is reserved for the second device for sending data to the first device and that is reserved for the first device for receiving data.

Before the first device sends the second SCI, the first SCI indicates, to another device, that the first time-frequency resource is the time-frequency resource that is reserved for the second device for sending data to the first device and that is reserved for the first device for receiving data. The another device is interfered by the second device when receiving data on the first time-frequency resource, and may interfere with, when sending data on the first time-frequency resource, the receiving performed by the first device. After the first device sends the second SCI, the first SCI indicates, to the another device, that the first time-frequency resource is the time-frequency resource reserved for the second device for sending data to the first device, and the another device is interfered by the second device when receiving data on the first time-frequency resource, but a sending behavior of the another device is not indicated.

Optionally, the first SCI further includes indication information of a first service priority of the data, information indicating a device identifier of the first device, and information indicating a device identifier of the second device. For example, the data is periodic service data.

The device identifier of the first device uniquely identifies the first device in a plurality of devices, and the device identifier of the second device uniquely identifies the second device in the plurality of devices.

Optionally, the first SCI further includes a first identifier, and the first identifier indicates the first device to send the second SCI.

Optionally, for the first SCI, a format of SCI in NR R16 may be used, and one reserved bit in first-stage SCI (SCI-1) in the format of the SCI is used for the first identifier. Optionally, when the reserved bit is 1, it indicates the first device to send the second SCI; and when the bit is 0, it indicates the first device not to send the second SCI. Alternatively when the bit is 0, it indicates the first device to send the second SCI; and when the bit is 1, it indicates the first device not to send the second SCI.

Optionally, the first SCI and the periodic service data are sent together.

Step 802: The first device sends the second SCI after receiving the first SCI, where the second SCI includes second indication information, and the second indication information indicates a second time-frequency resource.

After receiving the first SCI sent by the second device, the first device sends the second SCI.

The second indication information indicates a time-frequency position of the second time-frequency resource. The second time-frequency resource is a time-frequency resource reserved for the first device for receiving data, and the first time-frequency resource includes the second time-frequency resource.

The first device sends the second SCI to indicate the second time-frequency resource, to indicate, to another device, that sending data on the second time-frequency resource interferes with the first device.

After receiving the first SCI sent by the second device, the first device sends the second SCI. Optionally, a time-frequency resource used by the first device to send the second SCI may be determined according to a sensing and selection mechanism in NR R16.

Optionally, after receiving the first SCI, the first device needs to send the second SCI within a first time threshold. To be specific, an absolute value of a difference between a sending moment of the second SCI and a receiving moment of the first SCI needs to be less than the first time threshold. The first time threshold may be configured by a network by default. The first time threshold may also be preconfigured by using higher layer signaling. This is not limited in embodiments of this application.

Optionally, the second SCI further includes indication information of a second service priority of the data and the information indicating the device identifier of the second device, and the second service priority is determined based on the first service priority.

Optionally, if a service characteristic of data of the second device remains unchanged (for example, a service periodicity does not change or a service does not end), step 801 and step 802 are repeatedly performed. To be specific, when sending data of a periodic service, the second device sends the first SCI to reserve a resource for a sending behavior of the second device, and the first device sends the second SCI to reserve a resource for a receiving behavior of the first device after receiving the first SCI, to reduce sidelink interference and conflicts in a data transmission process, and improve transmission reliability. When a service characteristic of data of the second device changes, step 801 is performed again, to meet a requirement of the changed service characteristic. This is not limited in embodiments of this application.

In conclusion, in the resource processing method provided in embodiments of this application, the first indication information included in the first SCI indicates the first time-frequency resource. The first time-frequency resource is the time-frequency resource reserved for the second device for sending data to the first device, or indicates the time-frequency resource that is reserved for the second device for sending data to the first device and that is reserved for the first device for receiving data. Before the first device sends the second SCI, the first SCI indicates, to the another device, that the first time-frequency resource is the time-frequency resource that is reserved for the second device for sending data to the first device and that is reserved for the first device for receiving data. The another device is interfered by the second device when receiving data on the first time-frequency resource, and may interfere with, when sending data on the first time-frequency resource, the receiving performed by the first device. After the first device sends the second SCI, the first SCI indicates, to the another device, that the first time-frequency resource is the time-frequency resource reserved for the second device for sending data to the first device, and the another device is interfered by the second device when receiving data on the first time-frequency resource, but the sending behavior of the another device is not indicated. The second indication information included in the second SCI indicates the second time-frequency resource. The second time-frequency resource is the time-frequency resource reserved for the first device for receiving data, to indicate, to the another device, that sending data on the second time-frequency resource interferes with the first device. A transmit side and a receive side both send SCI to reserve a resource, to prevent the another device from causing strong interference to the first device, resolve a hidden terminal problem, reduce sidelink interference and conflicts, and improve transmission reliability. In addition, resource reservation performed by the receive side and the transmit side provides different indications for a receiving behavior and the sending behavior of the another device. The first device sends the second SCI to reserve a resource only for a receiving behavior of the first device. Before the first device sends the second SCI, the first SCI sent by the second device reserves a resource for the receiving behavior of the first device and a sending behavior of the second device. After the first device sends the second SCI, the second device sends SCI of the first type to reserve a resource for the sending behavior of the second device while sending periodic service data. Because the first device needs to send the second SCI within the first time threshold after receiving the first SCI, if the another device detects that an interval between two pieces of corresponding SCI of the first type is greater than the first time threshold, the another device can learn that the first device has sent the second SCI. In this case, if the another device does not receive the second SCI (or a received power of the second SCI is less than a specific threshold), receive resource reservation performed through all pieces of SCI of the first type may be invalidated. To be specific, a time-frequency resource indicated by the SCI of the first type is merely a time-frequency resource reserved for a transmit device for sending data rather than a time-frequency resource reserved for a receive device at a peer side of the transmit device for receiving data. In this way, the another device receiving the first SCI may share the time-frequency resource with the second device for data sending without causing severe interference to the first device, to avoid an exposed terminal problem, and improve spatial multiplexing efficiency on a sidelink.

Based on the embodiment provided in FIG. 8, the resource processing method may further include the following several steps, as shown in FIG. 9.

Step 901: The second device determines historical SCI in a window, where a type of the historical SCI includes a first type and a second type.

Optionally, when the second device needs to send information to the first device, the historical SCI in the window is determined, and the historical SCI is at least one piece of SCI historically received by the second device. The type of the historical SCI includes the first type and the second type.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; and SCI of the second type includes sixth indication information, the sixth indication information indicates a sixth time-frequency resource, and the sixth time-frequency resource is a time-frequency resource reserved for the receive device for receiving data.

Step 902: The second device determines, based on a preconfigured target resource pool, the historical SCI, and a first predefined rule, a target transmit time-frequency resource for sending information.

In a possible implementation, the first predefined rule includes:

If a received power of a specific piece of SCI of the first type is greater than a first power threshold, an absolute value of a difference between a receiving moment of the SCI of the first type and a current moment is less than a first time threshold, and the historical SCI does not include any other SCI of the first type satisfying a first preset condition, it indicates that SCI of the second type corresponding to the first type may not be sent yet, and sending data on a fifth time-frequency resource indicated by the SCI of the first type may interfere with a receive device indicated by the SCI of the first type, and therefore, the fifth time-frequency resource is removed from the target transmit time-frequency resource. Therefore, the target transmit time-frequency resource does not include the fifth time-frequency resource.

If a received power of a specific piece of SCI of the second type is greater than a second power threshold, and the SCI of the second type does not include the device identifier of the second device, it indicates that sending data on a sixth time-frequency resource indicated by the SCI of the second type may interfere with a receive device indicated by the SCI of the second type, and therefore, the sixth time-frequency resource is removed from the target transmit time-frequency resource. Therefore, the target transmit time-frequency resource does not include the sixth time-frequency resource.

In the embodiment provided in FIG. 8, after receiving one piece of SCI of the first type, the receive device needs to send one piece of SCI of the second type within a first time threshold. Therefore, when an absolute value of a difference between a receiving moment of the SCI of the first type and a current moment is greater than the first time threshold, the receive device has sent the SCI of the second type to reserve a receive resource of the receive device. Therefore, in this case, the SCI of the first type does not indicate sending performed by the second device. The first preset condition is for determining whether SCI that is of the second type and that corresponds to the SCI of the first type has been sent before the SCI of the first type. For a correspondence, refer to the correspondence in step 702. Details are not described herein again.

Optionally, the first power threshold is preconfigured, or is determined based on indication information of a service priority included in the SCI of the first type. For example, the first power threshold is correlated with the service priority included in the SCI of the first type, in other words, a higher service priority included in the SCI of the first type indicates a smaller first power threshold.

Optionally, the second power threshold is preconfigured, or is determined based on indication information of a service priority included in the SCI of the second type. For example, the second power threshold is correlated with the service priority included in the SCI of the second type, in other words, a higher service priority included in the SCI of the second type indicates a smaller second power threshold.

Optionally, the first preset condition is: The other SCI of the first type and the SCI of the first type include same information indicating an identifier of the transmit device, same information indicating an identifier of the receive device, and same information indicating a service priority, a time-frequency resource indicated by the other SCI of the first type includes the time-frequency resource indicated by the SCI of the first type, and a difference between the receiving moment of the SCI of the first type and a receiving moment of the other SCI of the first type is greater than the first time threshold. When the first preset condition is satisfied, two pieces of SCI of the first types are sent by a same transmit device to the receive device, and are for reserving a resource for a same service. In the embodiment shown in FIG. 8, after receiving one piece of SCI of the first type, the receive device needs to send one piece of SCI of the second type within a first time threshold. If receiving moments of the two pieces of SCI of the first type are greater than the first time threshold, it indicates that the receive device has sent the SCI of the second type to reserve a receive resource of the receive device. Therefore, in this case, the SCI of the first type does not indicate sending performed by the second device.

Optionally, if a proportion of the target transmit time-frequency resource to total resources of the target resource pool is less than a predefined first threshold, the first power threshold and the second power threshold are increased, and then step 902 is performed again, to ensure that the determined target transmit time-frequency resource meets the requirement of information transmission. If a proportion of the target transmit time-frequency resource to total resources of the target resource pool is greater than or equal to a predefined first threshold, step 903 is performed.

Step 903: The second device sends a trigger message, where the trigger message indicates the first device to report auxiliary information.

Step 904: The first device determines historical SCI in a window, where a type of the historical SCI includes the first type.

Step 905: The first device determines the auxiliary information based on the preconfigured target resource pool, the historical SCI, and a second predefined rule, where the auxiliary information includes a target receive time-frequency resource usable by the first device for receiving information.

Optionally, the second predefined rule includes: If a received power of a specific piece of SCI of the first type is greater than a first power threshold, and the SCI of the first type does not include the device identifier of the first device, it indicates that receiving data on a fifth time-frequency resource indicated by the SCI of the first type interferes with a transmit device indicated by the SCI of the first type, and therefore, the fifth time-frequency resource is removed from the target receive time-frequency resource. Therefore, the target receive time-frequency resource does not include the fifth time-frequency resource.

Optionally, the first power threshold is determined based on indication information of a service priority included in the SCI of the first type.

Optionally, if a proportion of the target receive time-frequency resource to the total resources of the target resource pool is less than a predefined second threshold, the first power threshold is increased, and then step 905 is performed again, to ensure that the determined target receive time-frequency resource meets the requirement of information transmission. If a proportion of the target transmit time-frequency resource to the total resources of the target resource pool is greater than or equal to a predefined second threshold, step 906 is performed.

Step 906: The first device reports the auxiliary information, where the auxiliary information includes the target receive time-frequency resource usable by the first device for receiving information.

Step 907: The second device determines a target time-frequency resource used by the second device to send information to the first device.

Optionally, if a proportion of the target time-frequency resource to the total resources of the target resource pool is less than a predefined third threshold, the first power threshold, the second power threshold, and a third power threshold are increased, and then steps 902 to 907 are performed again, to ensure that the determined target time-frequency resource meets the requirement of information transmission. If a proportion of the target time-frequency resource to the total resources of the target resource pool is greater than or equal to a predefined third threshold, information is sent on the target time-frequency resource.

It should be noted that, for related details of steps in this embodiment, refer to related descriptions in the foregoing embodiments by analogy. Details are not described herein again.

In conclusion, in this embodiment of this application, a device sensing a radio resource does not need to distinguish whether a type of SCI is the first type or the third type, to reduce detection overheads of the device and improving resource sensing and selection efficiency.

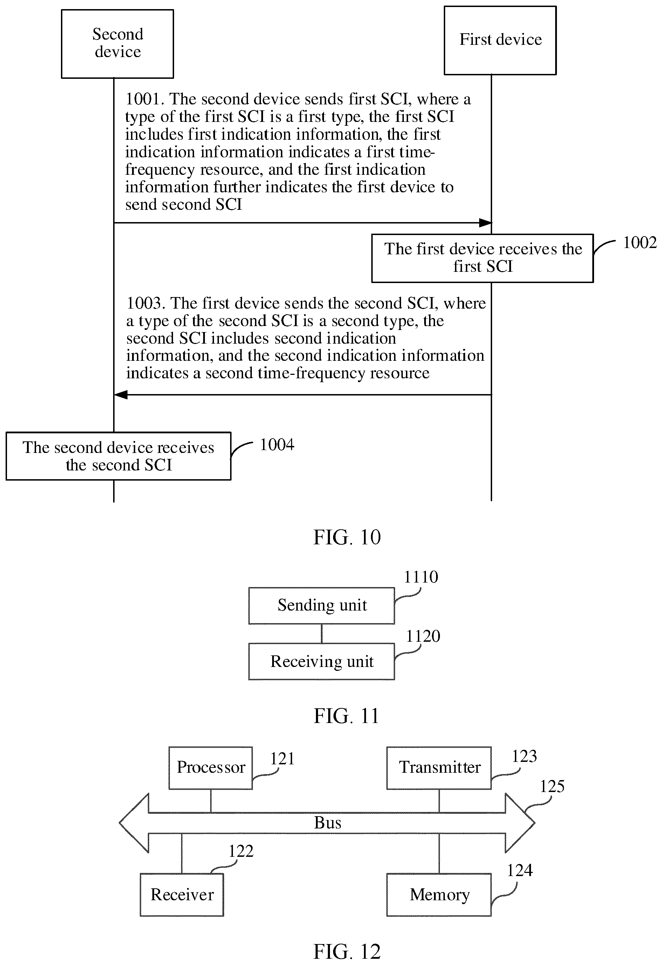

FIG. 10 is a flowchart of a resource processing method according to another example embodiment. The method may be applied to the network architecture shown in FIG. 3, FIG. 4, or FIG. 5. The method may include the following several steps.

Step 1001: A second device sends first SCI, where a type of the first SCI is a first type, the first SCI includes first indication information, the first indication information indicates a first time-frequency resource, and the first indication information further indicates a first device to send second SCI.

Step 1002: The first device receives the first SCI.

Step 1003: The first device sends the second SCI, where a type of the second SCI is a second type, the second SCI includes second indication information, and the second indication information indicates a second time-frequency resource.

Step 1004: The second device receives the second SCI.

It should be noted that, for related details of steps in this embodiment, refer to related descriptions in the foregoing embodiments. Details are not described herein again.

FIG. 11 is a block diagram of a resource processing apparatus according to an example embodiment of this application. The resource processing apparatus may be implemented as the entire or a part of a first device or a second device through software, hardware, or a combination of software and hardware. The resource processing apparatus may include a sending unit 1110 and a receiving unit 1120.

When the resource processing apparatus may be implemented as the entire or a part of a first device through software, hardware, or a combination of software and hardware, functions implemented by the sending unit 1110 and the receiving unit 1120 include, but are not limited to:
The receiving unit 1120 is configured to receive first SCI, where a type of the first SCI is a first type, the first SCI includes first indication information, the first indication information indicates a first time-frequency resource, and the first indication information further indicates the first device to send second SCI.

The sending unit 1110 is configured to send the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In a possible implementation, the first SCI further includes indication information of a first service priority of the data, information indicating a device identifier of the first device, and information indicating a device identifier of the second device.

The second SCI further includes indication information of a second service priority of the data and the information indicating the device identifier of the second device, and the second service priority is determined based on the first service priority.

In another possible implementation, an absolute value of a difference between a moment at which the first device sends the second SCI and a moment at which the first device receives the first SCI is less than or equal to a first time threshold, and the first time threshold is configured by a network by default.

In another possible implementation, the first SCI further includes a first identifier, and the first identifier indicates the first device to send the second SCI.

In another possible implementation, the first SCI further includes a second identifier, and the second identifier indicates that the type of the first SCI is the first type.

In another possible implementation, the receiving unit 1120 is further configured to receive third SCI, where a type of the third SCI is a third type, the third SCI includes third indication information, the third indication information indicates a third time-frequency resource, the third indication information further indicates, to another device, that the first device has sent the second SCI, and the another device is a device other than the first device and the second device.

The sending unit 1110 is further configured to send fourth SCI, where a type of the fourth SCI is the second type, the fourth SCI includes fourth indication information, and the fourth indication information indicates a fourth time-frequency resource.

In another possible implementation, the third time-frequency resource is a time-frequency resource reserved for the second device for sending data to the first device, and the fourth time-frequency resource is a time-frequency resource reserved for the first device for receiving data.

The first time-frequency resource includes the third time-frequency resource, and the third time-frequency resource includes the fourth time-frequency resource.

In another possible implementation, the third SCI further includes indication information of a first service priority of the data, information indicating a device identifier of the first device, and information indicating a device identifier of the second device.

The fourth SCI includes indication information of a second service priority of the data and the information indicating the device identifier of the second device.

In another possible implementation, the third SCI further includes a first identifier, and the first identifier indicates the first device to send the fourth SCI.

In another possible implementation, the third SCI further includes a second identifier, and the second identifier indicates that the type of the third SCI is the third type.

In another possible implementation, the apparatus further includes a processing unit.

The processing unit is configured to determine historical SCI in a window, where a type of the historical SCI includes the first type, or a type of the historical SCI includes the first type and the third type.

The processing unit is further configured to determine auxiliary information based on a preconfigured target resource pool, the historical SCI, and a second predefined rule, where the auxiliary information includes a target receive time-frequency resource usable by the first device for receiving information.

The sending unit 1110 is further configured to report the auxiliary information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; and SCI of the third type includes seventh indication information, the seventh indication information indicates a seventh time-frequency resource, and the seventh time-frequency resource is a time-frequency resource reserved for the transmit device for sending data.

In another possible implementation, the second predefined rule includes:
If a received power of the SCI of the first type is greater than a first power threshold, and the SCI of the first type does not include the device identifier of the first device, the target receive time-frequency resource does not include the fifth time-frequency resource.

In another possible implementation, the second predefined rule includes:
If a received power of the SCI of the first type is greater than a first power threshold, and the SCI of the first type does not include the device identifier of the first device, the target receive time-frequency resource does not include the fifth time-frequency resource.

If a received power of the SCI of the third type is greater than a third power threshold, and the SCI of the third type does not include the device identifier of the first device, the target receive time-frequency resource does not include the seventh time-frequency resource.

In another possible implementation, the first power threshold is determined based on indication information of a service priority included in the SCI of the first type; and/or the third power threshold is determined based on indication information of a service priority included in the SCI of the third type.

It should be noted that when the foregoing apparatus implements functions of the apparatus, it is illustrated with an example of division of the foregoing units. In an actual application, the functions may be distributed, based on actual requirements, to different units for implementation, to be specific, the internal structure of the first device is divided into different units, to implement all or some of the functions described above.

For the apparatus in the foregoing embodiments, specific operation execution manners of the unit in the apparatus have been described in detail in the embodiments about the method. For related details, refer to the foregoing method embodiments. Details are not described herein again.

When the resource processing apparatus may be implemented as the entire or a part of a second device through software, hardware, or a combination of software and hardware, functions implemented by the sending unit 1110 and the receiving unit 1120 include, but are not limited to:
The sending unit 1110 is configured to send first SCI, where a type of the first SCI is a first type, the first SCI includes first indication information, the first indication information indicates a first time-frequency resource, and the first indication information further indicates a first device to send second SCI.

The receiving unit 1120 is configured to receive the second SCI, where a type of the second SCI is a second type, the second SCI includes second indication information, and the second indication information indicates a second time-frequency resource.

The first time-frequency resource is a time-frequency resource reserved for the second device for sending data to the first device. Alternatively, the first time-frequency resource is a time-frequency resource that is reserved for the second device for sending data to the first device and that is reserved for the first device for receiving data. The second time-frequency resource is a time-frequency resource reserved for the first device for receiving data, and the first time-frequency resource includes the second time-frequency resource.

In a possible implementation, the first SCI further includes indication information of a first service priority of the data, information indicating a device identifier of the first device, and information indicating a device identifier of the second device.

The second SCI further includes indication information of a second service priority of the data and the information indicating the device identifier of the second device, and the second service priority is determined based on the first service priority.

In another possible implementation, an absolute value of a difference between a moment at which the first device sends the second SCI and a moment at which the first device receives the first SCI is less than or equal to a first time threshold, and the first time threshold is configured by a network by default.

In another possible implementation, the first SCI further includes a first identifier, and the first identifier indicates the first device to send the second SCI.

In another possible implementation, the first SCI further includes a second identifier, and the second identifier indicates that the type of the first SCI is the first type.

In another possible implementation,
the sending unit 1110 is configured to send third SCI, where a type of the third SCI is a third type, the third SCI includes third indication information, the third indication information indicates a third time-frequency resource, the third indication information further indicates, to the another device, that the first device has sent the second SCI, and the another device is a device other than the first device and the second device.

The receiving unit 1120 is configured to receive fourth SCI, where a type of the fourth SCI is the second type, the fourth SCI includes fourth indication information, and the fourth indication information indicates a fourth time-frequency resource.

In another possible implementation, the third time-frequency resource is a time-frequency resource reserved for the second device for sending data to the first device, and the fourth time-frequency resource is a time-frequency resource reserved for the first device for receiving data.

The first time-frequency resource includes the third time-frequency resource, and the third time-frequency resource includes the fourth time-frequency resource.

In another possible implementation, the third SCI further includes indication information of a first service priority of the data, information indicating a device identifier of the first device, and information indicating a device identifier of the second device.

The fourth SCI includes indication information of a second service priority of the data and the information indicating the device identifier of the second device.

In another possible implementation, the third SCI further includes a first identifier, and the first identifier indicates the first device to send the fourth SCI.

In another possible implementation, the third SCI further includes a second identifier, and the second identifier indicates that the type of the third SCI is the third type.

In another possible implementation, the apparatus further includes: a processing unit.

The processing unit is configured to determine historical SCI in a window, where a type of the historical SCI includes the first type and the second type, or a type of the historical SCI includes the first type, the second type, and the third type.

The processing unit is further configured to determine, based on a preconfigured target resource pool, the historical SCI, and a first predefined rule, a target transmit time-frequency resource for sending information.

SCI of the first type includes fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; SCI of the second type includes sixth indication information, the sixth indication information indicates a sixth time-frequency resource, and the sixth time-frequency resource is a time-frequency resource reserved for the receive device for receiving data; and SCI of the third type includes seventh indication information, the seventh indication information indicates a seventh time-frequency resource, and the seventh time-frequency resource is a time-frequency resource reserved for the transmit device for sending data.

In another possible implementation, the first predefined rule includes:
If a received power of the SCI of the first type is greater than a first power threshold, an absolute value of a difference between a receiving moment of the SCI of the first type and a current moment is less than a first time threshold, and the historical SCI does not include any other SCI of the first type satisfying a first preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In another possible implementation, the first preset condition is: The other SCI of the first type and the SCI of the first type include same information indicating an identifier of the transmit device, information indicating an identifier of the receive device, and information indicating a service priority, a time-frequency resource indicated by the other SCI of the first type includes the time-frequency resource indicated by the SCI of the first type, and a difference between the receiving moment of the SCI of the first type and a receiving moment of the other SCI of the first type is greater than the first time threshold.

In another possible implementation, the first predefined rule includes:
If a received power of the SCI of the first type is greater than a first power threshold, and the historical SCI does not include any SCI of the third type satisfying a second preset condition, the target transmit time-frequency resource does not include the fifth time-frequency resource.

If a received power of the SCI of the second type is greater than a second power threshold, and the SCI of the second type does not include the device identifier of the second device, the target transmit time-frequency resource does not include the sixth time-frequency resource.

In another possible implementation, the second preset condition is: The SCI of the first type and the SCI of the third type include same information indicating an identifier of the transmit device and same information indicating an identifier of the receive device, and the fifth time-frequency resource includes the seventh time-frequency resource.

In another possible implementation, the first power threshold is determined based on indication information of a service priority included in the SCI of the first type; and/or the second power threshold is determined based on indication information of a service priority included in the SCI of the second type.

It should be noted that when the foregoing apparatus implements functions of the apparatus, it is illustrated with an example of division of the foregoing units. In an actual application, the functions may be distributed, based on actual requirements, to different units for implementation, to be specific, the internal structure of the second device is divided into different units, to implement all or some of the functions described above.

For the apparatus in the foregoing embodiments, specific operation execution manners of the unit in the apparatus have been described in detail in the embodiments about the method. For related details, refer to the foregoing method embodiments. Details are not described herein again.

FIG. 12 is a schematic diagram of a structure of a first device according to an example embodiment of this application. The first device includes a processor 121, a receiver 122, a transmitter 123, a memory 124, and a bus 125.

The processor 121 includes one or more processing cores. The processor 121 executes various function applications and processes information by running a software program and module.

The receiver 122 and the transmitter 123 may be implemented as a communication component. The communication component may be a communication chip. The communication chip may include a receiving module, a transmission module, a modulation and demodulation module, and the like, and is configured to modulate and/or demodulate information and receive or send the information through a radio signal.

The memory 124 is connected to the processor 121 by the bus 125. The memory 124 stores program instructions and data that are necessary for the first device.

The processor 121 is configured to execute the program instructions and the data in the memory 124, to implement functions of the steps performed by the first device in the method embodiments of this application.

The processor 121 runs at least one program instruction in the memory 124 to control the receiver 122 to implement a receiving function on the first device side in the foregoing steps. The processor 121 runs at least one program instruction in the memory 124 to control the transmitter 123 to implement a sending function on the first device side in the foregoing steps.

In addition, the memory 124 may be implemented by any type of volatile or nonvolatile storage device or a combination thereof, like a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optic disc.

It may be understood that FIG. 12 merely shows a simplified design of the first device. In another embodiment, the first device may include any quantity of transmitters, receivers, processors, controllers, memories, communication units, and the like, and all first devices that can implement this application fall within the protection scope of this application.

A structure of the second device may be the same as or similar to a structure of the first device. Details are not described in this application again.

An embodiment of this application provides a resource processing apparatus. The apparatus includes a processor and a memory configured to store instructions executable by the processor. The processor is configured to execute the instructions to implement the foregoing method.

An embodiment of this application provides a computer program product, including computer-readable code or a nonvolatile computer-readable storage medium carrying computer-readable code. When the computer-readable code is run in a processor of an electronic device, the processor in the electronic device performs the foregoing method.

An embodiment of this application provides a resource processing system. The system includes a first device and a second device. The first device is configured to perform the resource processing method performed by the first device in the foregoing embodiments, and the second device is configured to perform the resource processing method performed by the second device in the foregoing embodiments.

An embodiment of this application provides a nonvolatile computer-readable storage medium. The nonvolatile computer-readable storage medium stores computer program instructions. When the computer program instructions are executed by a processor, the foregoing method is implemented.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. More specific examples (a non-exhaustive list) of computer-readable storage media include: a portable computer disk, a hard disk, a random access memory (Random Access Memory, RAM), a read-only memory (Read Only Memory, ROM), an erasable programmable read-only memory (Electrically Programmable Read-Only-Memory, EPROM, or flash memory), a static random access memory (Static Random-Access Memory, SRAM), a portable compact disk read-only memory (Compact Disc Read-Only Memory, CD-ROM), a digital versatile disc (Digital Video Disc, DVD), a memory stick, a floppy disk, a mechanical coding device like a punched card or a protrusion structure in a groove in which instructions are stored, and any appropriate combination of the above.

The computer-readable program instructions described herein may be downloaded from the computer-readable storage medium to respective computing/processing devices or to an external computer or external storage device through a network like the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions for performing the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming language includes an object-oriented programming language like Smalltalk and C++, and a conventional procedural programming language like a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer by any type of network, including a local area network (Local Area Network, LAN) or a wide area network (Wide Area Network, WAN), or may be connected to an external computer (for example, through an Internet connection using an Internet service provider). In some embodiments, an electronic circuit, for example, a programmable logic circuit, a field programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device so that a series of operation steps is performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagram and/or the flowchart and a combination of blocks in the block diagram and/or the flowchart may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although this application is described with reference to embodiments, in a process of implementing this application that claims protection, persons skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above, and the foregoing descriptions are illustrative but not exhaustive and are not limited to the disclosed embodiments. Many modifications and variations are apparent to persons of ordinary skill in the art without departing from the scope and spirit of the described embodiments. The selection of terms used herein is intended to best explain the principles of embodiments, practical applications, or improvements to technologies in the market, or to enable other persons of ordinary skill in the art to understand the embodiments disclosed herein.

## Claims

1. A resource processing method, applied to a first device, wherein the method comprises:
receiving first sidelink control information SCI, wherein a type of the first SCI is a first type, the first SCI comprises first indication information, the first indication information indicates a first time-frequency resource, and the first indication information further indicates the first device to send second SCI; and
sending the second SCI, wherein a type of the second SCI is a second type, the second SCI comprises second indication information, and the second indication information indicates a second time-frequency resource, wherein
the first time-frequency resource is a time-frequency resource reserved for a second device for sending data to the first device, or the first time-frequency resource is a time-frequency resource that is reserved for the second device for sending data to the first device and that is reserved for the first device for receiving data; and the second time-frequency resource is a time-frequency resource reserved for the first device for receiving data, and the first time-frequency resource comprises the second time-frequency resource.

2. The method according to claim 1, wherein the first SCI further comprises indication information of a first service priority of the data, information indicating a device identifier of the first device, and information indicating a device identifier of the second device; and
the second SCI further comprises indication information of a second service priority of the data and the information indicating the device identifier of the second device, and the second service priority is determined based on the first service priority.

3. The method according to claim 1, wherein an absolute value of a difference between a moment at which the first device sends the second SCI and a moment at which the first device receives the first SCI is less than or equal to a first time threshold, and the first time threshold is configured by a network by default.

4. The method according to claim 1, wherein the first SCI further comprises a first identifier, and the first identifier indicates the first device to send the second SCI.

5. The method according to claim 1, wherein the first SCI further comprises a second identifier, and the second identifier indicates that the type of the first SCI is the first type.

6. The method according to claim 5, wherein after the sending the second SCI, the method further comprises:
receiving third SCI, wherein a type of the third SCI is a third type, the third SCI comprises third indication information, the third indication information indicates a third time-frequency resource, the third indication information further indicates, to another device, that the first device has sent the second SCI, and the another device is a device other than the first device and the second device; and
sending fourth SCI, wherein a type of the fourth SCI is the second type, the fourth SCI comprises fourth indication information, and the fourth indication information indicates a fourth time-frequency resource.

7. The method according to claim 6, wherein the third time-frequency resource is a time-frequency resource reserved for the second device for sending data to the first device, and the fourth time-frequency resource is a time-frequency resource reserved for the first device for receiving data, wherein
the first time-frequency resource comprises the third time-frequency resource, and the third time-frequency resource comprises the fourth time-frequency resource.

8. The method according to claim 6, wherein the third SCI further comprises indication information of a first service priority of the data, information indicating a device identifier of the first device, and information indicating a device identifier of the second device; and
the fourth SCI comprises indication information of a second service priority of the data and the information indicating the device identifier of the second device.

9. The method according to claim 6, wherein the third SCI further comprises a first identifier, and the first identifier indicates the first device to send the fourth SCI.

10. The method according to claim 6, wherein the third SCI further comprises a second identifier, and the second identifier indicates that the type of the third SCI is the third type.

11. The method according to any one of claims 1 to 10, wherein before the receiving first SCI, the method further comprises:
determining historical SCI in a window, wherein a type of the historical SCI comprises the first type, or a type of the historical SCI comprises the first type and the third type;
determining auxiliary information based on a preconfigured target resource pool, the historical SCI, and a second predefined rule, wherein the auxiliary information comprises a target receive time-frequency resource usable by the first device for receiving information; and
reporting the auxiliary information, wherein
SCI of the first type comprises fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; and SCI of the third type comprises seventh indication information, the seventh indication information indicates a seventh time-frequency resource, and the seventh time-frequency resource is a time-frequency resource reserved for the transmit device for sending data.

12. The method according to claim 11, wherein the second predefined rule comprises:
if a received power of the SCI of the first type is greater than a first power threshold, and the SCI of the first type does not comprise the device identifier of the first device, the target receive time-frequency resource does not comprise the fifth time-frequency resource.

13. The method according to claim 11, wherein the second predefined rule comprises:
if a received power of the SCI of the first type is greater than a first power threshold, and the SCI of the first type does not comprise the device identifier of the first device, the target receive time-frequency resource does not comprise the fifth time-frequency resource; and
if a received power of the SCI of the third type is greater than a third power threshold, and the SCI of the third type does not comprise the device identifier of the first device, the target receive time-frequency resource does not comprise the seventh time-frequency resource.

14. The method according to claim 12 or 13, wherein the first power threshold is determined based on indication information of a service priority comprised in the SCI of the first type; and/or the third power threshold is determined based on indication information of a service priority comprised in the SCI of the third type.

15. A resource processing method, applied to a second device, wherein the method comprises:
sending first sidelink control information SCI, wherein a type of the first SCI is a first type, the first SCI comprises first indication information, the first indication information indicates a first time-frequency resource, and the first indication information further indicates a first device to send second SCI; and
receiving the second SCI, wherein a type of the second SCI is a second type, the second SCI comprises second indication information, and the second indication information indicates a second time-frequency resource, wherein
the first time-frequency resource is a time-frequency resource reserved for the second device for sending data to the first device, or the first time-frequency resource is a time-frequency resource that is reserved for the second device for sending data to the first device and that is reserved for the first device for receiving data; and the second time-frequency resource is a time-frequency resource reserved for the first device for receiving data, and the first time-frequency resource comprises the second time-frequency resource.

16. The method according to claim 15, wherein the first SCI further comprises indication information of a first service priority of the data, information indicating a device identifier of the first device, and information indicating a device identifier of the second device; and
the second SCI further comprises indication information of a second service priority of the data and the information indicating the device identifier of the second device, and the second service priority is determined based on the first service priority.

17. The method according to claim 15, wherein an absolute value of a difference between a moment at which the first device sends the second SCI and a moment at which the first device receives the first SCI is less than or equal to a first time threshold, and the first time threshold is configured by a network by default.

18. The method according to claim 15, wherein the first SCI further comprises a first identifier, and the first identifier indicates the first device to send the second SCI.

19. The method according to claim 15, wherein the first SCI further comprises a second identifier, and the second identifier indicates that the type of the first SCI is the first type.

20. The method according to claim 19, wherein after the receiving the second SCI, the method further comprises:
sending third SCI, wherein a type of the third SCI is a third type, the third SCI comprises third indication information, the third indication information indicates a third time-frequency resource, the third indication information further indicates, to another device, that the first device has sent the second SCI, and the another device is a device other than the first device and the second device; and
receiving fourth SCI, wherein a type of the fourth SCI is the second type, the fourth SCI comprises fourth indication information, and the fourth indication information indicates a fourth time-frequency resource.

21. The method according to claim 20, wherein the third time-frequency resource is a time-frequency resource reserved for the second device for sending data to the first device, and the fourth time-frequency resource is a time-frequency resource reserved for the first device for receiving data, wherein
the first time-frequency resource comprises the third time-frequency resource, and the third time-frequency resource comprises the fourth time-frequency resource.

22. The method according to claim 20, wherein the third SCI further comprises indication information of a first service priority of the data, information indicating a device identifier of the first device, and information indicating a device identifier of the second device; and
the fourth SCI comprises indication information of a second service priority of the data and the information indicating the device identifier of the second device.

23. The method according to claim 20, wherein the third SCI further comprises a first identifier, and the first identifier indicates the first device to send the fourth SCI.

24. The method according to claim 20, wherein the third SCI further comprises a second identifier, and the second identifier indicates that the type of the third SCI is the third type.

25. The method according to any one of claims 15 to 24, wherein before the sending first SCI, the method further comprises:
determining historical SCI in a window, wherein a type of the historical SCI comprises the first type and the second type, or a type of the historical SCI comprises the first type, the second type, and the third type; and
determining, based on a preconfigured target resource pool, the historical SCI, and a first predefined rule, a target transmit time-frequency resource for sending information, wherein
SCI of the first type comprises fifth indication information, the fifth indication information indicates a fifth time-frequency resource, and the fifth time-frequency resource is a time-frequency resource reserved for a transmit device for sending data, or the fifth time-frequency resource is a time-frequency resource that is reserved for the transmit device for sending data and that is reserved for a receive device for receiving data; SCI of the second type comprises sixth indication information, the sixth indication information indicates a sixth time-frequency resource, and the sixth time-frequency resource is a time-frequency resource reserved for the receive device for receiving data; and SCI of the third type comprises seventh indication information, the seventh indication information indicates a seventh time-frequency resource, and the seventh time-frequency resource is a time-frequency resource reserved for the transmit device for sending data.

26. The method according to claim 25, wherein the first predefined rule comprises:
if a received power of the SCI of the first type is greater than a first power threshold, an absolute value of a difference between a receiving moment of the SCI of the first type and a current moment is less than a first time threshold, and the historical SCI does not comprise any other SCI of the first type satisfying a first preset condition, the target transmit time-frequency resource does not comprise the fifth time-frequency resource; and
if a received power of the SCI of the second type is greater than a second power threshold, and the SCI of the second type does not comprise the device identifier of the second device, the target transmit time-frequency resource does not comprise the sixth time-frequency resource.

27. The method according to claim 26, wherein the first preset condition is: the other SCI of the first type and the SCI of the first type comprise same information indicating an identifier of the transmit device, same information indicating an identifier of the receive device, and same information indicating a service priority, a time-frequency resource indicated by the other SCI of the first type comprises the time-frequency resource indicated by the SCI of the first type, and a difference between the receiving moment of the SCI of the first type and a receiving moment of the other SCI of the first type is greater than the first time threshold.

28. The method according to claim 25, wherein the first predefined rule comprises:
if a received power of the SCI of the first type is greater than a first power threshold, and the historical SCI does not comprise any SCI of the third type satisfying a second preset condition, the target transmit time-frequency resource does not comprise the fifth time-frequency resource; and
if a received power of the SCI of the second type is greater than a second power threshold, and the SCI of the second type does not comprise the device identifier of the second device, the target transmit time-frequency resource does not comprise the sixth time-frequency resource.

29. The method according to claim 28, wherein the second preset condition is: the SCI of the first type and the SCI of the third type comprise same information indicating an identifier of the transmit device and same information indicating an identifier of the receive device, and the fifth time-frequency resource comprises the seventh time-frequency resource.

30. The method according to any one of claims 26 to 28, wherein
the first power threshold is determined based on indication information of a service priority comprised in the SCI of the first type; and/or the second power threshold is determined based on indication information of a service priority comprised in the SCI of the second type.

31. A resource processing apparatus, wherein the apparatus comprises:
a processor; and
a memory, configured to store instructions executable by the processor, wherein
the processor is configured to perform the method according to any one of claims 1 to 14 or perform the method according to any one of claims 15 to 30 when executing the instructions.

32. A nonvolatile computer-readable storage medium, wherein the nonvolatile computer-readable storage medium stores computer program instructions; and when the computer program instructions are executed by a processor, the method according to any one of claims 1 to 14 is implemented, or the method according to any one of claims 15 to 30 is implemented.

33. A computer program product, wherein the computer program product comprises computer-readable code or a nonvolatile computer-readable storage medium carrying the computer-readable code; and when the computer-readable code is run in an electronic device, a processor in the electronic device performs the method according to any one of claims 1 to 14, or performs the method according to any one of claims 15 to 30.
